# EUROPÄISCHE PATENTSCHRIFT

(11) **EP 4 162 562 B1**
(45) Veröffentlichungstag und Bekanntmachung des Hinweises auf die Patenterteilung: **25.03.2026**
(21) Anmeldenummer: 21730888.1
(22) Anmeldetag: 02.06.2021
(51) Int. Cl.: H01M 50/30, H01M 50/342

(54) **ELEKTROCHEMISCHE ZELLE, VERFAHREN ZUR HERSTELLUNG EINER ELEKTROCHEMISCHEN ZELLE, ELEKTROCHEMISCHES SYSTEM UND VERFAHREN ZUR HERSTELLUNG EINES ELEKTROCHEMISCHEN SYSTEMS**
ELECTROCHEMICAL CELL, METHOD FOR PRODUCING AN ELECTROCHEMICAL CELL, ELECTROCHEMICAL SYSTEM, AND METHOD FOR PRODUCING AN ELECTROCHEMICAL SYSTEM
CELLULE ÉLECTROCHIMIQUE, PROCÉDÉ DE FABRICATION D'UNE CELLULE ÉLECTROCHIMIQUE, SYSTÈME ÉLECTROCHIMIQUE ET PROCÉDÉ DE FABRICATION D'UN SYSTÈME ÉLECTROCHIMIQUE

(30) Priorität: 05.06.2020 DE 102020207109
(43) Veröffentlichungstag der Anmeldung: 12.04.2023
(73) Patentinhaber: ElringKlinger AG, 72581 Dettingen (DE)
(72) Erfinder: EIDAM, Kirk, 65520 Bad Camberg (DE); SCHULZ, Björn, 65618 Selters (Ts. (DE); SCHÄFER, Bernd, 35794 Mengerskirchen (DE); WACHHOLZ, Ingo, 65594 Runkel (DE); SCHERER, Mathias, 72488 Sigmaringen (DE)
(74) Vertreter: DTS Patent- und Rechtsanwälte PartmbB
(86) Internationale Anmeldenummer: PCT/EP2021/064853
(87) Internationale Veröffentlichungsnummer: WO 2021/245168

(56) Entgegenhaltungen:
- EP-A1- 0 262 070
- GB-A- 2 013 963
- JP-A- H01 309 253
- US-A1- 2005 069 760

## Beschreibung

Die vorliegende Erfindung betrifft eine elektrochemische Zelle, ein Verfahren zur Herstellung einer elektrochemischen Zelle, ein elektrochemisches System und ein Verfahren zur Herstellung eines elektrochemischen Systems.

Eine Berstvorrichtung soll möglichst einfach herstellbar sein und ein kontrolliertes Öffnen im Falle eines Überdrucks ermöglichen. Innerhalb der elektrochemischen Zelle besteht die Gefahr einer Überladung, bei welcher Fluid im Innenraum der elektrochemischen Zelle freigesetzt wird. Hierdurch kommt es insbesondere zu einem Anstieg eines Drucks in dem Innenraum der elektrochemischen Zelle. Insbesondere besteht die Gefahr einer sich selbst verstärkenden Wärmeentwicklung und eines Überhitzens der elektrochemischen Zelle oder benachbarter elektrochemischer Zellen, wodurch es zu einer explosionsartigen Entzündung kommen kann (ein sogenannter "thermal runaway").

Um einen sogenannten "thermal runaway" oder ein anderes thermisches Event zu kontrollieren, kann durch die Berstvorrichtung ein Druckausgleich mit einer Umgebung der elektrochemischen Zelle durchgeführt werden.

Das Dokument US 2005/0069760 A1 beschreibt eine dichte rechteckige Batterie.

Die vorliegende Erfindung betrifft eine elektrochemische Zelle und ein Verfahren zur Herstellung einer elektrochemischen Zelle.

Die vorliegende Erfindung betrifft ein elektrochemisches System und ein Verfahren zur Herstellung eines elektrochemischen Systems.

Der vorliegenden Erfindung liegt die Aufgabe zugrunde, eine elektrochemische Zelle bereitzustellen, welche möglichst einfach herstellbar ist und bei welcher im Falle eines Überdrucks in einem Innenraum der elektrochemischen Zelle Fluid aus dem Innenraum ausströmen kann.

Diese Aufgabe wird durch eine elektrochemische Zelle gelöst, welche ein Gehäuse, das einen Innenraum der elektrochemischen Zelle umgibt, und eine Berstvorrichtung umfasst, wobei die Berstvorrichtung an einer Wandung des Gehäuses angeordnet ist und insbesondere einstückig mit der Wandung ausgebildet ist.

Die Berstvorrichtung umfasst mindestens einen Berststeg. Der mindestens eine Berststeg weist eine in Längsrichtung variierende Dicke auf und ist durch mindestens eine erste Vertiefung, welche an einer dem Innenraum zugewandten Innenseite der Wandung angeordnet ist, und mindestens eine zweite Vertiefung, welche an einer dem Innenraum abgewandten Außenseite der Wandung angeordnet ist, gebildet.

Insbesondere eignet sich die elektrochemische Zelle zur Verwendung in einem Fahrzeug.

Beispielsweise ist die elektrochemische Zelle eine Lithiumionenbatterie und/oder ein Lithiumionenakkumulator.

Insbesondere in Ausführungsformen, in welchen der mindestens eine Berststeg gekrümmt oder gewölbt ausgebildet ist, ist die Längsrichtung vorzugsweise eine Umfangsrichtung.

Die Wandung ist vorzugsweise durch ein Wandungsbauteil gebildet. Beispielsweise ist das Wandungsbauteil ein Abdeckelement der elektrochemischen Zelle.

Der mindestens eine Berststeg ist durch Prägen gebildet, insbesondere durch Prägen eines nicht vorbearbeiteten Bereichs der Wandung.

Durch das Prägen ist vorzugsweise eine gezielte Einbringung des mindestens einen Berststegs möglich. Hierdurch kann insbesondere ein Berstverhalten der Berstvorrichtung eingestellt werden.

Beispielsweise ist durch eine gewählte Einprägetiefe und/oder eine Länge des mindestens einen Berststegs ein Berstdruck einstellbar, bei dessen Übersteigen ein Teil des mindestens einen Berststegs oder der mindestens eine Berststeg als Ganzes bricht und/oder reißt.

Der Berstdruck ist vorzugsweise identisch mit dem kritischen Druck in dem Innenraum der elektrochemischen Zelle.

Beispielsweise sind die mindestens eine erste Vertiefung und die mindestens eine zweite Vertiefung durch beidseitiges Einprägen in ein Vollmaterial der Wandung gebildet.

Vorteilhaft kann es sein, wenn die mindestens eine erste Vertiefung und/oder die mindestens eine zweite Vertiefung einen Bodenbereich aufweist, in welchem eine Einprägetiefe der jeweiligen Vertiefung maximal ist.

Vorteilhaft kann es sein, wenn die Berstvorrichtung derart angeordnet und/oder ausgebildet ist, dass der mindestens eine Berststeg bei einem Übersteigen eines kritischen Drucks und/oder einer kritischen Temperatur im Innenraum der elektrochemischen Zelle, abhängig von dessen Dicke teilweise oder vollständig bricht und/oder reißt, wodurch die Berstvorrichtung von einem geschlossenen in einen geöffneten Zustand gelangt.

In einem geschlossenen Zustand der Berstvorrichtung verbindet der mindestens eine Berststeg eine von dem mindestens einen Berststeg umgebene Berstfläche und einen den mindestens einen Berststeg umgebenden Bereich des Wandungsbauteils vorzugsweise fluiddicht.

In dem geöffneten Zustand der Berstvorrichtung wird vorzugsweise die von dem mindestens einen Berststeg umgebene Berstfläche von dem Innenraum weggedrückt und/oder nach außen aufgeklappt.

Günstig kann es sein, wenn der mindestens eine Berststeg, welcher eine in Längsrichtung variierende Dicke aufweist, durch eine Vertiefung gebildet ist, welche an der dem Innenraum zugewandten Innenseite der Wandung der elektrochemischen Zelle angeordnet ist, insbesondere in diese eingeprägt ist. Die Vertiefung ist vorzugsweise eine erste Vertiefung.

Die Berstvorrichtung der elektrochemischen Zelle weist vorzugsweise eines oder mehrere im Zusammenhang mit der hierin offenbarten Berstvorrichtung im Folgenden beschriebenen Merkmale und/oder einen oder mehrere der im Zusammenhang mit der hierin offenbarten Berstvorrichtung im Folgenden beschriebenen Vorteile auf:
- Die Berstvorrichtung umfasst ein Wandungsbauteil, das mindestens einen Berststeg aufweist. Der mindestens eine Berststeg weist eine in Längsrichtung variierende Dicke auf. Der mindestens eine Berststeg ist durch mindestens eine erste Vertiefung, welche an einer ersten Seite des Wandungsbauteils angeordnet ist, und mindestens eine zweite Vertiefung, welche an einer der ersten Seite abgewandten zweiten Seite des Wandungsbauteils angeordnet ist, gebildet.
- Die Berstvorrichtung eignet sich beispielsweise zur Verwendung in einem elek¬trochemischen System, beispielsweise einer elektrochemischen Zelle eines elektrochemischen Systems.
- Vorzugsweise bildet ein Teil des mindestens einen Berststegs oder der gesamte mindestens eine Berststeg eine Sollbruchstelle. Die mindestens eine Sollbruchstelle ist beispielsweise eine Materialschwachstelle, welche durch die mindestens eine erste Vertiefung und/oder die mindestens eine zweite Vertiefung gebildet ist.
- Insbesondere in Ausführungsformen, in welchen der mindestens eine Berststeg gewinkelt oder gewölbt ausgebildet ist, handelt es sich bei der Längsrichtung vorzugsweise um eine Umfangsrichtung des mindestens einen Berststegs.
- Vorzugsweise definiert der mindestens eine Berststeg einen Berstweg. Insbesondere weist der mindestens eine Berststeg in Verlaufsrichtung des Berstwegs eine variierende Materialstärke auf.
- Der mindestens eine Berststeg ist vorzugsweise schnurförmig und/oder linienförmig ausgebildet. So kann ein Berstverhalten der Berstvorrichtung möglichst exakt vorgegeben werden. Es kann so insbesondere eine Berstvorrichtung mit reproduzierbarem Berstverhalten ausgebildet werden.
- Für eine erleichterte Handhabung während einer Montage und/oder für die Herstellung der Berstvorrichtung kann es vorteilhaft sein, wenn der mindestens eine Berststeg von einem äußeren Rand eines den mindestens einen Berststegs umgebenden Bereich des Wandungsbauteils beabstandet ist.
- Der den mindestens einen Berststeg umgebende Bereich des Wandungsbauteils ist vorzugsweise ein Grundkörper des Wandungsbauteils.
- Die mindestens eine erste Vertiefung und die mindestens eine zweite Vertiefung sind vorzugsweise beidseitige Vertiefungen und/oder an einander gegenüberliegenden Seiten des Wandungsbauteils angeordnet.
- Vorzugsweise ist die erste Seite eine Unterseite und/oder eine in einem eingebauten Zustand der Berstvorrichtung einem Innenraum des Behälters zugewandte Innenseite.
- Die zweite Seite des Wandungsbauteils ist vorzugsweise eine Oberseite des Wandungsbauteils und/oder eine in einem eingebauten Zustand der Berstvorrichtung dem Innenraum des Behälters abgewandte Außenseite.
- Vorteilhaft kann es sein, wenn der mindestens eine Berststeg durch Prägen des Wandungsbauteils gebildet ist.
- Insbesondere sind die mindestens eine erste Vertiefung und/oder die mindestens eine zweite Vertiefung durch Prägen gebildet.
- Durch das Prägen, insbesondere in ein Vollmaterial ohne Vorbearbeitung, kann eine Berstvorrichtung mit einer definierten Geometrie erzeugt werden.
- Insbesondere bilden die mindestens eine erste Vertiefung und/oder die mindestens eine zweite Vertiefung Prägevertiefungen und/oder sind in ein Vollmaterial eingebracht.
- Vorzugsweise ist und/oder wird das Wandungsbauteil ausschließlich im Bereich der mindestens einen ersten Vertiefung und/oder der mindestens einen zweiten Vertiefung geprägt.
- Durch das Prägen kann ein Materialvolumen, welches verdrängt werden muss, minimiert werden. Insbesondere ist eine Bearbeitung größerer Flächen des Wandungsbauteils entbehrlich.
- Vorzugsweise kann durch das Prägen des Wandungsbauteils eine Berstmembran gebildet werden, welche einstückig und/oder einteilig mit dem den mindestens einen Berststeg umgebenden Bereich des Wandungsbauteils ausgebildet ist.
- Aufwändige Montageprozesse einer separat hergestellten Berstmembran, beispielsweise Einschweißen einer separaten Berstmembran, sind durch die einstückige und/oder einteilige Ausbildung der Berstvorrichtung insbesondere entbehrlich.
- Günstig kann es sein, wenn die mindestens eine erste Vertiefung und/oder die mindestens eine zweite Vertiefung in nicht vorbearbeitete Bereiche des Wandungsbauteils eingebracht sind und/oder werden.
- Das Wandungsbauteil umfasst vorzugsweise ein metallisches Material, beispielsweise Aluminium, oder ist aus einem metallischen Material, beispielsweise Aluminium, gebildet.
- Vorteilhaft kann es sein, wenn der mindestens eine Berststeg in einem parallel zu einer Haupterstreckungsebene des Wandungsbauteils genommenen Querschnitt eine geschlossene Form aufweist, deren Erstreckung in einer Raumrichtung, beispielsweise um einen Faktor 2 oder mehr, größer ist als in einer senkrecht dazu verlaufenden Raumrichtung. Beispielsweise ist der mindestens eine Berststeg in einer Draufsicht asymmetrisch ausgebildet.
- In Ausführungsformen, in welchen das Wandungsbauteil als Ganzes eine Wölbung aufweist, beziehen sich Merkmale, welche durch eine Beziehung zu der Haupterstreckungsebene des Wandungsbauteils definiert sind, vorzugsweise auf eine senkrecht zu einer Normalen des Wandungsbauteils angeordneten Ebene.
- Gemäß einer bevorzugten Ausführungsform ist der mindestens eine Berststeg in einem parallel zu der Haupterstreckungsebene des Wandungsbauteils genommenen Querschnitt zumindest näherungsweise oval oder zumindest näherungsweise rechteckförmig ausgebildet.
- Beispielsweise ist der mindestens eine Berststeg in einem parallel zu der Haupterstreckungsebene des Wandungsbauteils genommenen Querschnitt stadionförmig ausgebildet.
- Alternativ sind auch andere Formen des mindestens einen Berststegs denkbar, beispielsweise weitere polygonale Formen.
- Vorteilhaft kann es sein, wenn die Vertiefungen sich im Bereich des mindestens einen Berststegs in senkrecht zur Haupterstreckungsebene des Wandungsbauteils verlaufenden Richtungen, insbesondere beidseitig, zur Mittelebene des Wandungsbauteils hin verjüngen.
- Vorteilhaft kann es sein, wenn die mindestens eine erste Vertiefung und/oder die mindestens eine zweite Vertiefung in einem senkrecht zur Haupterstreckungsebene des Wandungsbauteils genommenen Querschnitt zumindest näherungsweise dreieckförmig, in Form eines gleichschenkligen Trapezes oder kreisbogenförmig, beispielsweise U-förmig, sind.
- Beispielsweise sind die mindestens eine erste Vertiefung oder und/oder die mindestens eine zweite Vertiefung in Form eines gleichschenkligen Dreiecks und/oder zumindest näherungsweise V-förmig ausgebildet.
- Alternativ zu den genannten Formen können die mindestens eine erste Vertiefung und/oder die mindestens eine zweite Vertiefung in Form eines rechtwinkligen Dreiecks und/oder in K-Form ausgebildet sein.
- Die mindestens eine erste Vertiefung und die mindestens eine zweite Vertiefung können voneinander verschiedene Formen aufweisen. Beispielsweise kann die mindestens eine erste Vertiefung eine V-Form aufweisen und die mindestens eine zweite Vertiefung weist eine U-Form auf.
- Gemäß einer bevorzugten Ausführungsform weisen die mindestens eine erste Vertiefung und die mindestens eine zweite Vertiefung die gleiche Form auf.
- Günstig kann es sein, wenn die mindestens eine erste Vertiefung und/oder die mindestens eine zweite Vertiefung jeweils einen Bodenbereich aufweist, in welchem eine Einprägetiefe der jeweiligen Vertiefung maximal ist.
- Vorzugsweise schließen sich beidseitig an den jeweiligen Bodenbereich jeweils zwei Flankenbereiche an, welche den Bodenbereich und nicht nachbearbeitete Bereiche des Wandungsbauteils miteinander verbinden.
- Insbesondere beträgt ein Verhältnis einer Dicke des Wandungsbauteils in einem den mindestens einen Berststeg, insbesondere von außen, umgebenden Bereich zu einer Dicke des mindestens einen Berststegs mindestens ca. 2:1 und/oder höchstens ca. 30:1.
- Durch eine Einstellung der Dicke des mindestens einen Berststegs kann ein zuverlässiges Öffnen der Berstvorrichtung sichergestellt werden.
- Die Dicke des Wandungsbauteils bezeichnet vorzugsweise eine durchschnittliche Materialstärke und/oder eine Ausgangsmaterialstärke, insbesondere vor einem Einbringen der mindestens einen ersten Vertiefung und/oder der mindestens einen zweiten Vertiefung.
- Die Dicke des Wandungsbauteils und/oder die Dicke des mindestens einen Berststegs sind vorzugsweise senkrecht zur Haupterstreckungsebene des Wandungsbauteils definiert.
- Vorteilhaft kann es sein, wenn der mindestens eine Berststeg derart angeordnet und/oder ausgebildet ist, dass er bei einem Übersteigen eines kritischen Drucks und/oder einer kritischen Temperatur teilweise oder vollständig bricht und/oder reißt.
- Vorzugsweise bricht und/oder reißt der mindestens eine Berststeg aufgrund einer durch einen Druck bewirkten Kraft, welche quer zur Haupterstreckungsebene des Wandungsbauteils wirkt.
- Vorteilhaft kann es sein, wenn der mindestens eine Berststeg eine, insbesondere ringförmig, geschlossene Form aufweist, welche eine Berstfläche umgibt. Die Berstfläche bildet beispielsweise eine Berstmembran.
- Insbesondere weist die Berstfläche eine Dicke auf, welche zumindest näherungsweise einer Dicke des den mindestens einen Berststeg umgebenden Bereichs des Wandungsbauteils entspricht.
- Günstig kann es sein, wenn der mindestens eine Berststeg mindestens einen Bruchabschnitt und mindestens einen Halteabschnitt aufweist. Eine minimale Materialstärke des mindestens einen Berststegs im mindestens einen Bruchabschnitt ist insbesondere um mindestens ca. 10 %, insbesondere um mindestens ca. 30 %, geringer als eine minimale Materialstärke des mindestens einen Berststegs im mindestens einen Halteabschnitt.
- Der mindestens eine Bruchabschnitt bildet in einem montierten Zustand der Berstvorrichtung bei einem Übersteigen eines kritischen Drucks und/oder einer kritischen Temperatur in einem Innenraum eines Behälters, der das Wandungsbauteil umfasst, vorzugsweise eine Sollbruchstelle, welche bricht und/oder reißt. So kann die Berstfläche nach außen gedrückt werden und/oder nach außen aufklappen. Die Berstvorrichtung gelangt so in einen geöffneten Zustand.
- Der mindestens eine Halteabschnitt bildet im montierten Zustand der Berstvorrichtung bei einem Übersteigen eines kritischen Drucks und/oder einer kritischen Temperatur in einem Innenraum des Behälters, der das Wandungsbauteil umfasst, vorzugsweise ein Scharnierelement und/oder eine Ablenklinie, um welche(s) die Berstfläche umgebogen und/oder geschwenkt wird.
- Insbesondere bildet der mindestens eine Halteabschnitt einen Drehpunkt, um welchen bei einem Öffnen der Berstvorrichtung eine Bewegung der Berstfläche relativ zu dem den mindestens einen Berststeg umgebenden Bereich des Wandungsbauteils erfolgt. So kann eine einseitige Öffnung der Berstvorrichtung erfolgen.
- Durch den mindestens einen Halteabschnitt kann vermieden werden, dass sich bei einem Bersten der Berstvorrichtung Teile des Wandungsabschnitts vollständig von einem Grundkörper desselben lösen. Insbesondere kann durch den mindestens einen Halteabschnitt ein kontrolliertes Öffnen der Berstvorrichtung erfolgen.
- Durch eine, insbesondere kontrollierte, Bewegung, beispielsweise ein kontrolliertes Verschwenken, der Berstfläche um den mindestens einen Halteabschnitt kann die Berstfläche ein Strömungsleitelement für aus dem Innenraum ausströmendes Fluid bilden. Insbesondere kann ein gerichteter Fluidstrom aus dem Innenraum des Behälters heraus gebildet werden.
- Alternativ dazu, dass der mindestens eine Halteabschnitt von einem Teil des mindestens einen Berststegs gebildet ist, kann vorgesehen sein, dass der Halteabschnitt von einem an den mindestens einen Berststeg angrenzenden Bereich des Wandungsbauteils gebildet ist. Der mindestens eine Berststeg bildet dann insbesondere als Ganzes den mindestens einen Bruchabschnitt.
- Beispielsweise ist der mindestens eine Berststeg in einem parallel zur Haupterstreckungsebene des Wandungsbauteils genommenen Querschnitt zumindest näherungsweise U-förmig ausgebildet.
- Vorteilhaft kann es sein, wenn ein Verhältnis einer Dicke des Wandungsbauteils zu einer Breite des mindestens einen Berststegs mindestens ca. 5:1, insbesondere mindestens ca. 10:1, beträgt.
- Die Breite des mindestens einen Berststegs ist vorzugsweise identisch mit einer Breite des Bodenbereichs der mindestens einen ersten Vertiefung und/oder mit einer Breite des Bodenbereichs der mindestens einen zweiten Vertiefung, insbesondere in einer zumindest näherungsweise parallel zur Haupterstreckungsebene des Wandungsbauteils verlaufenden Richtung.
- Vorteilhaft kann es sein, wenn ein Verhältnis eines durch die mindestens eine erste Vertiefung und/oder die mindestens eine zweite Vertiefung gebildeten Volumens zu einem Volumen eines bearbeiteten Bereichs des Wandungsbauteils, in welchem die mindestens eine erste Vertiefung und/oder die mindestens eine zweite Vertiefung angeordnet sind, mindestens ca. 1:2 und/oder höchstens ca. 4:1 beträgt.
- Insbesondere beträgt ein Verhältnis eines durch die mindestens eine erste Vertiefung und die mindestens eine zweite Vertiefung gebildeten Volumens zu einem Volumen eines bearbeiteten Bereichs des Wandungsbauteils, in welchem die mindestens eine erste Vertiefung und die mindestens eine zweite Vertiefung angeordnet sind, mindestens ca. 1:2 und/oder höchstens ca. 4:1.
- Das durch die mindestens eine erste Vertiefung und/oder die mindestens eine zweite Vertiefung gebildete Volumen ist vorzugsweise ein Volumen, welches durch Bearbeitung des bearbeiteten Bereichs entfernt und/oder verdrängt wurde.
- Vorzugsweise ist das durch die mindestens eine erste Vertiefung gebildete Volumen ein Volumen, welches von den Flankenbereichen und dem Bodenbereich des Wandungsbauteils begrenzt ist. Ergänzend wird das durch die mindestens eine erste Vertiefung gebildete Volumen insbesondere von einer Verlängerung einer Oberfläche der ersten Seite des Wandungsbauteils in einem nicht bearbeiteten Bereich begrenzt.
- Das durch die mindestens eine zweite Vertiefung gebildete Volumen ist vorzugsweise ein Volumen, welches von den Flankenbereichen und dem Bodenbereich des Wandungsbauteils begrenzt ist. Ergänzend wird das durch die mindestens eine zweite Vertiefung gebildete Volumen insbesondere von einer Verlängerung einer Oberfläche der zweiten Seite des Wandungsbauteils in einem nicht bearbeiteten Bereich begrenzt.
- Günstig kann es sein, wenn die Berstvorrichtung mehrere Berststegteile umfasst, wobei ein Berststegteil einen, insbesondere geschlossenen, Berststegrand bildet und wobei ein oder mehrere weitere Berststegteile Trennberststege bilden, welche eine von dem Berststegrand umgebene Berstfläche in mehrere Berstflächenteile unterteilen.
- Vorzugsweise liegt der mindestens eine Berststeg zumindest näherungsweise in einer Mittelebene des Wandungsbauteils.
- Die Mittelebene des Wandungsbauteils ist vorzugsweise zumindest näherungsweise parallel zur Haupterstreckungsebene des Wandungsbauteils.
- Insbesondere weist das Wandungsbauteil im Bereich der mindestens einen ersten Vertiefung und im Bereich der mindestens einen zweiten Vertiefung dieselbe Einprägetiefe auf.
- Alternativ kann vorgesehen sein, dass eine Einprägetiefe im Bereich der mindestens einen ersten Vertiefung um mindestens ca. 45 %, insbesondere mindestens ca. 40 %, kleiner als eine Einprägetiefe im Bereich der mindestens einen zweiten Vertiefung ist.

Vorteilhaft kann es sein, wenn der mindestens eine Berststeg mindestens einen Bruchabschnitt aufweist, welcher bei einem Übersteigen eines kritischen Drucks und/oder einer kritischen Temperatur im Innenraum der elektrochemischen Zelle bricht und/oder reißt.

Vorzugsweise weist der mindestens eine Berststeg mindestens einen Halteabschnitt auf, welcher bei einem Übersteigen eines kritischen Drucks und/oder einer kritischen Temperatur im Innenraum der elektrochemischen Zelle eine Verbindung zwischen einer von dem mindestens einen Berststeg umgebenen Berstfläche und einem den mindestens einen Berststeg umgebenden Bereich der Wandung aufrechterhält und um welchen die Berstfläche bewegt, insbesondere verschwenkt, wird.

In Ausführungsformen, in welchen die Berstfläche mehrere Berstflächenteile umfasst, welche beispielsweise durch Trennberststege voneinander getrennt sind, umfasst der mindestens eine Berststeg vorzugsweise mehrere Halteabschnitte. Insbesondere wird jeweils ein Berstflächenteil um einen Halteabschnitt herumbewegt, insbesondere verschwenkt.

Der mindestens eine Halteabschnitt bildet beispielsweise eine Ablenklinie, um welche die Berstfläche umgelenkt und/oder abgelenkt wird.

Beispielsweise bildet der mindestens eine Halteabschnitt mindestens ein Scharnierelement, um welches die Berstfläche oder Teile davon umgelenkt wird/werden.

Vorzugsweise bildet die Berstfläche ein Leitblech für einen Hitzestrom, welcher im geöffneten Zustand der Berstvorrichtung aus dem Innenraum der elektrochemischen Zelle ausströmt.

Vorzugsweise bilden der mindestens eine Halteabschnitt und der mindestens eine Bruchabschnitt aneinander angrenzende Bereiche des mindestens einen Berststegs, deren Dicken voneinander abweichen, wobei ein Übergang zwischen den Bereichen unterschiedlicher Dicke beispielsweise stufenförmig verläuft.

Alternativ zu einem stufenförmigen Übergang kann vorgesehen sein, dass der mindestens eine Berststeg einen Dickengradient und/oder Dickenverlauf aufweist.

Vorzugsweise bildet eine von dem mindestens einen Bruchabschnitt umgebene Berstfläche in einem geöffneten Zustand der Berstvorrichtung ein Strömungsleitelement für aus dem Innenraum der elektrochemischen Zelle ausströmendes Fluid.

Vorzugsweise schließt die Berstfläche mit einer Haupterstreckungsebene der Wandung im geöffneten Zustand der Berstvorrichtung oder während eines Öffnungsvorgangs einen Öffnungswinkel von mindestens ca. 10° und/oder höchstens ca. 80° ein.

Insbesondere erfolgt im geöffneten Zustand der Berstvorrichtung ein gerichtetes Ausströmen und/oder ein geführtes Entgasen.

Die Berstfläche bildet beispielsweise ein Hitzeleitblech.

Die Berstfläche hat vorzugsweise bei einem Öffnen der Berstvorrichtung eine gaslenkende Funktion.

Vorteilhaft kann es sein, wenn der mindestens eine Berststeg eine, insbesondere ringförmig, geschlossene Form aufweist und beispielsweise in einem parallel zu einer Haupterstreckungsebene des Wandungsbauteils genommenen Querschnitt näherungsweise oval oder zumindest näherungsweise rechteckförmig ausgebildet ist.

Vorzugsweise beträgt ein Verhältnis einer Länge des Bruchabschnitts des mindestens einen Berststegs zu einer Länge des Halteabschnitts des mindestens einen Berststegs mindestens 2:1 und/oder höchstens 20:1.

Vorteilhaft kann es sein, wenn der Bruchabschnitt des mindestens einen Berststegs in einem parallel zur Haupterstreckungsebene der Wandung genommenen Querschnitt zumindest näherungsweise eine U-Form bildet und wenn der Halteabschnitt des mindestens einen Berststegs Schenkel der U-Form zu einer geschlossenen Form verbindet.

Es kann ferner vorgesehen sein, dass eine beidseitige Prägung zur Herstellung des Berststegs dient, wobei Einprägetiefen auf den beiden Seiten unterschiedlich sein können. Insbesondere kann vorgesehen sein, dass eine Einprägetiefe zur Herstellung des Berststegs zumindest abschnittsweise oder vollständig umlaufend an einer Seite mindestens ungefähr das Doppelte, vorzugsweise mindestens ungefähr das Fünffache, beispielsweise mindestens ungefähr das Zehnfache, einer Einprägetiefe an der weiteren Seite (Gegenseite) beträgt.

Ferner kann ergänzend zu einer Prägung, insbesondere zusätzlich zu einer Prägung zur Herstellung des Berststegs, eine Verformung oder Formgebung zur Herstellung einer Ringzacke vorgesehen sein. Hierdurch kann insbesondere eine optimierte Positionierung und/oder Führung während der Herstellung des Berstelements ermöglicht werden.

Günstig kann es sein, wenn die erste Vertiefung einen eine Innenflanke bildenden Flankenbereich und einen eine Außenflanke bildenden Flankenbereich umfasst.

Die Innenflanke ist der Berstfläche zugewandt angeordnet. Die Außenflanke ist auf der der Berstfläche abgewandten Seite des Berststegs angeordnet.

Vorteilhaft kann es sein, wenn die Innenflanke und die Außenflanke an unterschiedlichen Stellen längs des Berststegs variierende Winkel mit einer Hauptfläche und/oder Mittelebene des Berstelements einschließen.

Beispielsweise kann vorgesehen sein, dass in einem Bruchabschnitt des Berststegs, insbesondere in einem einem Halteabschnitt gegenüberliegenden Gegengeradenabschnitt, welcher einen insbesondere geraden Bruchabschnitt bildet, ein Winkel αₐ (alpha a) zwischen der Außenflanke und der Hauptfläche und/oder Mittelebene des Berstelements mindestens ungefähr 60°, vorzugsweise mindestens ungefähr 80°, insbesondere mindestens ungefähr 85°, und/oder höchstens ungefähr 90°, vorzugsweise höchstens ungefähr 89°, beträgt. Beispielsweise beträgt der Winkel ungefähr 88°.

Ferner kann vorgesehen sein, dass in dem Bruchabschnitt des Berststegs, insbesondere in dem dem Halteabschnitt gegenüberliegenden Gegengeradenabschnitt, welcher einen insbesondere geraden Bruchabschnitt bildet, ein Winkel αᵢ (alpha i) zwischen der Innenflanke und der Hauptfläche und/oder Mittelebene des Berstelements mindestens ungefähr 35°, vorzugsweise mindestens ungefähr 40°, insbesondere mindestens ungefähr 50°, und/oder höchstens ungefähr 75°, vorzugsweise höchstens ungefähr 65°, beträgt. Beispielsweise beträgt der Winkel ungefähr 60°.

Beispielsweise kann vorgesehen sein, dass in einem Halteabschnitt des Berststegs ein Winkel βₐ (beta a) zwischen der Außenflanke und der Hauptfläche und/oder Mittelebene des Berstelements mindestens ungefähr 60°, vorzugsweise mindestens ungefähr 80°, insbesondere mindestens ungefähr 85°, und/oder höchstens ungefähr 90°, vorzugsweise höchstens ungefähr 89°, beträgt. Beispielsweise beträgt der Winkel ungefähr 88°.

Ferner kann vorgesehen sein, dass in dem Halteabschnitt des Berststegs ein Winkel βᵢ (beta i) zwischen der Innenflanke und der Hauptfläche und/oder Mittelebene des Berstelements mindestens ungefähr 35°, vorzugsweise mindestens ungefähr 40°, insbesondere mindestens ungefähr 50°, und/oder höchstens ungefähr 75°, vorzugsweise höchstens ungefähr 65°, beträgt. Beispielsweise beträgt der Winkel ungefähr 60°.

Beispielsweise kann vorgesehen sein, dass in einem oder in zwei Kurvenabschnitten des Berststegs, welche einen Bruchabschnitt bilden und insbesondere jeweils einen Halteabschnitt mit einem Gegengeradenabschnitt verbinden, ein Winkel γₐ (gamma a) zwischen der Außenflanke und der Hauptfläche und/oder Mittelebene des Berstelements mindestens ungefähr 30°, vorzugsweise mindestens ungefähr 40°, insbesondere mindestens ungefähr 50°, und/oder höchstens ungefähr 80°, vorzugsweise höchstens ungefähr 70°, beträgt. Beispielsweise beträgt der Winkel ungefähr 60°.

Ferner kann vorgesehen sein, dass in einem oder in zwei Kurvenabschnitten des Berststegs, welche einen Bruchabschnitt bilden und insbesondere jeweils einen Halteabschnitt mit einem Gegengeradenabschnitt verbinden, ein Winkel γᵢ (gamma i) zwischen der Innenflanke und der Hauptfläche und/oder Mittelebene des Berstelements mindestens ungefähr 30°, vorzugsweise mindestens ungefähr 40°, insbesondere mindestens ungefähr 50°, und/oder höchstens ungefähr 80°, vorzugsweise höchstens ungefähr 70°, beträgt. Beispielsweise beträgt der Winkel ungefähr 60°.

Der Winkel αᵢ (alpha i) ist vorzugsweise kleiner als der Winkel αₐ (alpha a). Alternativ oder ergänzend hierzu kann vorgesehen sein, dass der Winkel βᵢ (beta i) kleiner ist als der Winkle βₐ (beta a).

Der Winkel γᵢ (gamma i) ist vorzugsweise zumindest näherungsweise gleich dem Winkel γₐ (gamma a).

Durch die beschriebene Winkelwahl kann insbesondere eine optimierte und zuverlässige Öffnung des Berstelements ermöglicht werden, wobei vorzugsweise ferner ein vollständiges Ablösen der Berstfläche von dem umgebenden Bereich vermieden werden kann. Ferner kann vorzugsweise ein gewünschter Öffnungswinkel der Berstfläche eingestellt werden, wobei der Öffnungswinkel angibt, um welchen Winkel die Berstfläche um den Halteabschnitt rotiert, bis sie in einer Offenstellung angelangt.

Es kann vorgesehen sein, dass eine Dicke des Berststegs in einem oder mehreren oder sämtlichen Bruchabschnitten geringer ist als im Halteabschnitt.

Zudem ist der Berststeg im Halteabschnitt vorzugsweise breiter ausgebildet, was insbesondere dadurch erhältlich ist, dass ein Prägewerkzeug zur Herstellung des Berstelements weitestgehend ähnlich geformte Flanken wie im Gegengeradenabschnitt aufweist, an seinem den Berststeg definierenden Ende jedoch abgeflacht und/oder verkürzt ausgebildet ist.

Günstig kann es sein, wenn das Berstelement, insbesondere der Berststeg, so ausgelegt, insbesondere derart dimensioniert, ist, dass das Berstelement bei Erreichen eines Differenzdrucks zwischen einer Innenseite und einer Außenseite von mehr als 4 bar, insbesondere mehr als 7 bar, vorzugsweise ungefähr bei 9 bar, versagt und dabei eine Öffnung zwischen der Innenseite und der Außenseite freigibt.

Eine Einprägetiefe der ersten Vertiefung ist vorzugsweise größer als eine Einprägetiefe der zweiten Vertiefung, wobei die erste Vertiefung vorzugsweise an einer einem Druckraum abgewandten Außenseite des Berstelements angeordnet ist.

Optional kann insbesondere zusätzlich zu einer einseitigen Prägung eine Gegenprägung mit geringer Einprägetiefe vorgesehen sein.

Grundsätzlich eignen sich die vorstehend genannten Angaben zur Optimierung einer ersten Vertiefung und/oder einer zweiten Vertiefung.

Die Erfindung betrifft ferner ein Verfahren zur Herstellung einer erfindungsgemäßen elektrochemischen Zelle.

Der Erfindung liegt diesbezüglich die Aufgabe zugrunde, ein Verfahren bereitzustellen, mittels welchem eine elektrochemische Zelle möglichst einfach herstellbar ist.

Diese Aufgabe wird durch ein Verfahren gemäß dem unabhängigen auf ein Verfahren zur Herstellung einer elektrochemischen Zelle gerichteten Anspruch gelöst.

Gemäß dem Verfahren wird eine Wandung eines Gehäuses einer elektrochemischen Zelle, insbesondere ein Abdeckelement, bereitgestellt.

In die Wandung wird mindestens ein Berststeg eingebracht.

Der mindestens eine Berststeg weist eine in Längsrichtung variierende Dicke auf.

Ergänzend dazu, dass der mindestens eine Berststeg eine in Längsrichtung variierende Dicke aufweist, wird mindestens eine erste Vertiefung an einer ersten Seite der Wandung und mindestens eine zweite Vertiefung an einer der ersten Seite der Wandung abgewandten zweiten Seite der Wandung eingebracht, wodurch der mindestens eine Berststeg gebildet wird.

Vorzugsweise werden die mindestens eine erste Vertiefung und die mindestens eine zweite Vertiefung gleichzeitig in die Wandung der elektrochemischen Zelle eingebracht.

Insbesondere anschließend, wird die Wandung mit einem oder mehreren weiteren Gehäusebauteilen verbunden, sodass ein Innenraum der elektrochemischen Zelle von dem Gehäuse der elektrochemischen Zelle umgeben ist.

Eines oder mehrere der im Zusammenhang mit der erfindungsgemäßen elektrochemischen Zelle beschriebenen Merkmale und/oder einer oder mehrere der im Zusammenhang mit der erfindungsgemäßen elektrochemischen Zelle beschriebenen Vorteile gelten vorzugsweise für das erfindungsgemäße Verfahren gleichermaßen.

Der mindestens eine Berststeg wird in die Wandung der elektrochemischen Zelle eingeprägt.

Die vorliegende Erfindung betrifft ferner ein elektrochemisches System.

Der Erfindung liegt diesbezüglich die Aufgabe zugrunde, ein elektrochemisches System bereitzustellen, welches möglichst einfach herstellbar ist.

Diese Aufgabe wird erfindungsgemäß durch ein elektrochemisches System gemäß dem unabhängigen auf ein elektrochemisches System gerichteten Anspruch gelöst.

Das elektrochemische System umfasst eine oder mehrere erfindungsgemäße elektrochemische Zellen.

Ergänzend oder alternativ umfasst das elektrochemische System ein Gehäuse, welches einen Innenraum des elektrochemischen Systems umgibt, und eine Berstvorrichtung, welche an einer Wandung des Gehäuses angeordnet ist und insbesondere einstückig mit der Wandung ausgebildet ist.

Die Berstvorrichtung umfasst mindestens einen Berststeg.

Der mindestens eine Berststeg weist eine in Längsrichtung variierende Dicke auf und ist durch mindestens eine erste Vertiefung, welche an einer dem Innenraum zugewandten Innenseite der Wandung des elektrochemischen Systems angeordnet ist, und mindestens eine zweite Vertiefung, welche an einer dem Innenraum abgewandten Außenseite der Wandung des elektrochemischen Systems angeordnet ist, gebildet, wobei der mindestens eine Berststeg durch Prägen gebildet ist.

Das erfindungsgemäße elektrochemische System weist vorzugsweise eines oder mehrere der im Zusammenhang mit der erfindungsgemäßen elektrochemischen Zelle beschriebenen Merkmale und/oder einen oder mehrere der im Zusammenhang mit der erfindungsgemäßen elektrochemischen Zelle beschriebenen Vorteile auf.

Ferner betrifft die vorliegende Erfindung ein Verfahren zur Herstellung eines erfindungsgemäßen elektrochemischen Systems.

Der Erfindung liegt diesbezüglich die Aufgabe zugrunde, ein Verfahren bereitzustellen, mittels welchem ein elektrochemisches System möglichst einfach herstellbar ist.

Diese Aufgabe wird durch ein Verfahren zur Herstellung eines elektrochemischen Systems gemäß dem unabhängigen auf ein Verfahren zur Herstellung eines elektrochemischen Systems gerichteten Anspruch gelöst.

Es wird eine Wandung eines Gehäuses eines elektrochemischen Systems bereitgestellt. In die Wandung wird mindestens ein Berststeg eingebracht. Der mindestens eine Berststeg weist eine in Längsrichtung variierende Dicke auf.

Ergänzend wird mindestens eine erste Vertiefung an einer ersten Seite der Wandung und mindestens eine zweite Vertiefung an einer der ersten Seite der Wandung abgewandten zweiten Seite der Wandung eingebracht, wodurch der mindestens eine Berststeg gebildet wird.

Vorzugsweise werden die mindestens eine erste Vertiefung und die mindestens eine zweite Vertiefung gleichzeitig in die Wandung eingebracht.

Insbesondere anschließend, wird die Wandung mit einem oder mehreren weiteren Gehäusebauteilen verbunden, sodass ein Innenraum des elektrochemischen Systems von dem Gehäuse des elektrochemischen Systems umgeben ist.

Der mindestens eine Berststeg wird in die Wandung des elektrochemischen Systems eingeprägt.

Vorzugsweise werden die mindestens eine erste Vertiefung und die mindestens eine zweite Vertiefung durch Prägen in die Wandung des elektrochemischen Systems eingebracht.

Das erfindungsgemäße Verfahren zur Herstellung eines elektrochemischen Systems weist vorzugsweise ein oder mehrere Merkmale der erfindungsgemäßen elektrochemischen Zelle und/oder ein oder mehrere Vorteile der erfindungsgemäßen elektrochemischen Zelle auf.

Weitere bevorzugte Merkmale und/oder Vorteile der Erfindung sind Gegenstand der nachfolgenden Beschreibung und der zeichnerischen Darstellung von Ausführungsbeispielen.

Es zeigen:
- Fig. 1: eine schematische perspektivische Darstellung einer Ausführungsform eines elektrochemischen Systems, welches mehrere Berstvorrichtungen umfasst;
- Fig. 2: eine schematische perspektivische Darstellung mehrerer elektrochemischer Zellen des elektrochemischen Systems aus Fig. 1, wobei an und/oder in jedem Abdeckelement der elektrochemischen Zellen jeweils eine Berstvorrichtung mittig zwischen Zellterminals angeordnet ist;
- Fig. 3: eine schematische perspektivische Darstellung einer Ausführungsform einer Berstvorrichtung in geschlossenem Zustand, wobei ein Wandungsbauteil der Berstvorrichtung einen Berststeg aufweist, der in einer Draufsicht zumindest näherungsweise oval ausgebildet ist;
- Fig. 4: eine schematische Draufsicht auf die Berstvorrichtung aus Fig. 3;
- Fig. 5: eine schematische Schnittdarstellung durch die Berstvorrichtung aus den Fig. 3 und 4 längs einer in Fig. 4 mit V bezeichneten Ebene;
- Fig. 6: eine vergrößerte Darstellung des in Fig. 5 mit VI bezeichneten Bereichs;
- Fig. 7: eine im Wesentlichen der Fig. 6 entsprechende schematische Schnittdarstellung der Berstvorrichtung aus den Fig. 3 bis 6, wobei ein Volumen, im Bereich dessen bei einem Einbringen einer ersten Vertiefung und einer zweiten Vertiefung Material verdrängt und/oder entfernt wurde, eingezeichnet ist;
- Fig. 8: eine im Wesentlichen der Fig. 6 entsprechende schematische Schnittdarstellung der Berstvorrichtung aus den Fig. 3 bis 7, wobei ein Volumen eines Bereichs des Wandungsbauteils, welcher beim Einbringen des Berststegs bearbeitet wird, eingezeichnet ist.
- Fig. 9: einen der Fig. 6 ähnlichen Schnitt durch einen Gegengeradenabschnitt einer alternativen Ausführungsform einer Berstvorrichtung;
- Fig. 10: einen der Fig. 9 entsprechenden Schnitt durch einen Halteabschnitt der Berstvorrichtung aus Fig. 9; und
- Fig. 11: einen der Fig. 9 entsprechenden Schnitt durch einen Kurvenabschnitt der Berstvorrichtung aus Fig. 9.

Gleiche oder funktional äquivalente Elemente sind in sämtlichen Figuren mit denselben Bezugszeichen bezeichnet.

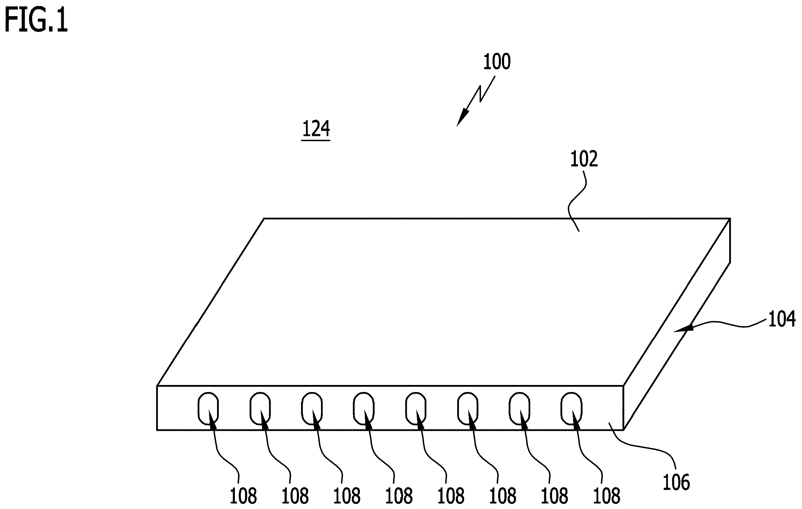

In Fig. 1 ist ein Gehäuse 102 eines als Ganzes mit 100 bezeichneten elektrochemischen Systems gezeigt.

Das elektrochemische System 100 ist vorzugsweise zur Verwendung in einem Fahrzeug geeignet. Beispielsweise ist das elektrochemische System 100 ein Batteriemodul.

Vorliegend ist das Gehäuse 102 zumindest näherungsweise quaderförmig ausgebildet und umgibt einen Innenraum 104 des elektrochemischen Systems 100. An einer als Nebenseite ausgebildeten Wandung 106 des Gehäuses 102 sind vorliegend mehrere Berstvorrichtungen 108 angeordnet.

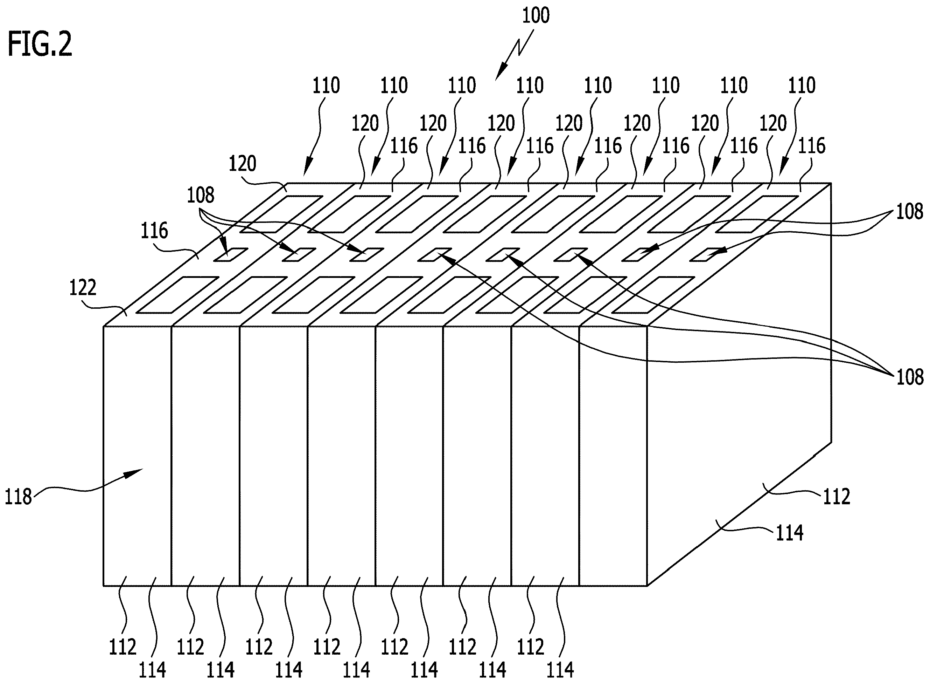

In dem Innenraum 104 des elektrochemischen Systems 100 sind vorliegend mehrere elektrochemische Zellen 110 angeordnet (vgl. Fig. 2).

Beispielsweise sind die mehreren elektrochemischen Zellen 110 prismatische elektrochemische Zellen.

Vorzugsweise sind die mehreren elektrochemischen Zellen 110 Lithiumionenbatterien und/oder Lithiumionenakkumulatoren.

Jede der elektrochemischen Zellen 110 umfasst vorliegend ein zumindest näherungsweise becherförmig ausgebildetes erstes Gehäusebauteil 112 eines Gehäuses 114. Das erste Gehäusebauteil 112 ist vorliegend jeweils von einem zweiten Gehäusebauteil 116 des Gehäuses 114 abgedeckt und/oder verschlossen, insbesondere derart, dass ein Innenraum 118 der jeweiligen elektrochemischen Zelle 110 fluiddicht umschlossen ist.

Das zweite Gehäusebauteil 116 ist vorliegend ein Abdeckelement 120.

Die Abdeckelemente 120 bilden vorliegend jeweils eine Wandung 122 des Gehäuses 114 der jeweiligen elektrochemischen Zelle 110, an und/oder in welcher eine Berstvorrichtung 108 angeordnet ist.

Alternativ dazu, dass sowohl an und/oder in einer Wandung 106 des Gehäuses 102 des elektrochemischen Systems 100 als auch an und/oder in Wandungen 122 der elektrochemischen Zellen 110 Berstvorrichtungen 108 angeordnet sind, kann vorgesehen sein, dass entweder ausschließlich an und/oder in der Wandung 106 des Gehäuses 102 des elektrochemischen Systems 100 oder ausschließlich an/oder in einer Wandung 122 einer oder mehrerer elektrochemischer Zellen 110 eine oder mehrere Berstvorrichtungen 108 vorgesehen sind.

Die Berstvorrichtungen 108 dienen vorzugsweise einem Druckausgleich zwischen einem Innenraum 104 des elektrochemischen Systems 100 und einer Umgebung 124 des elektrochemischen Systems 100 im Falle eines Übersteigens eines kritischen Drucks und/oder einer kritischen Temperatur im Innenraum 104 des elektrochemischen Systems 100.

Ergänzend oder alternativ dienen die Berstvorrichtungen 108 jeweils einem Druckausgleich zwischen einem Innenraum 118 einer oder mehrerer elektrochemischer Zellen 110 und einer Umgebung der jeweiligen elektrochemischen Zelle 110 im Falle eines Übersteigens eines kritischen Drucks und/oder einer kritischen Temperatur im Innenraum 118 der jeweiligen elektrochemischen Zelle 110.

In den Fig. 1 und 2 sind die Berstvorrichtungen 108 rein schematisch dargestellt.

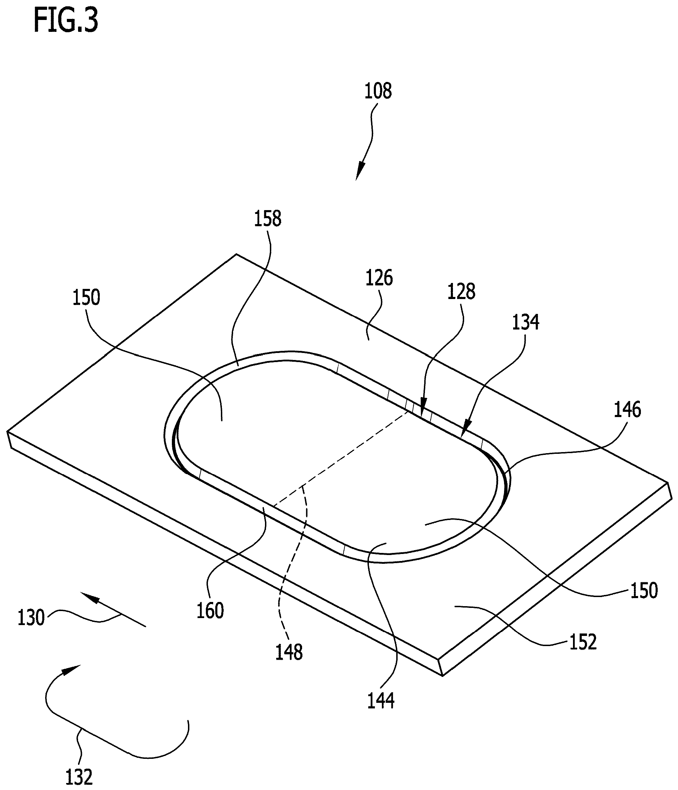

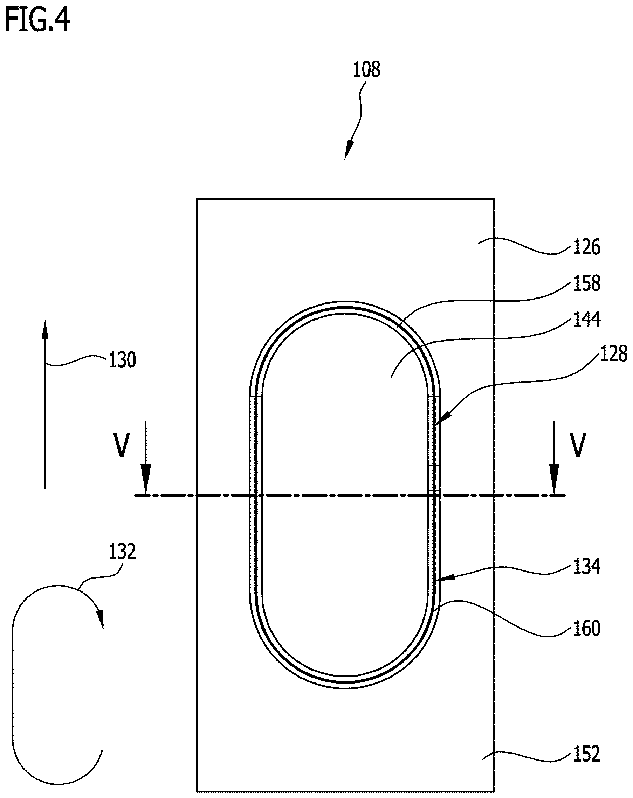

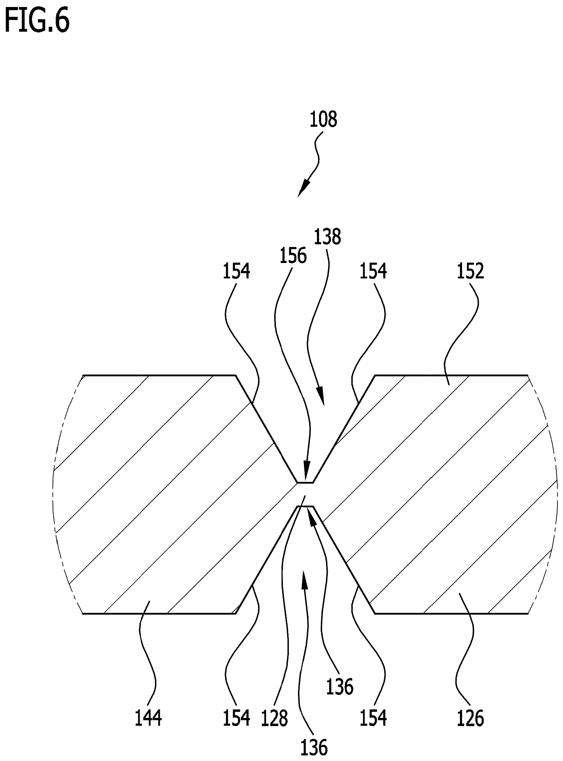

In den Fig. 3 bis 8 ist eine bevorzugte Ausführungsform einer Berstvorrichtung 108, wie sie beispielsweise in dem elektrochemischen System 100 und/oder den elektrochemischen Zellen 110 verwendet werden kann, detaillierter dargestellt. Diese bevorzugte Ausführungsform wird nachfolgend im Einzelnen beschrieben werden.

Alternativ zu einer Verwendung in einem elektrochemischen System 100 und/oder einer oder mehreren elektrochemischen Zellen 110 eignet sich die Berstvorrichtung 108 zur Verwendung in weiteren Systemen, in welchen bei einem Übersteigen eines kritischen Drucks und/oder einer kritischen Temperatur in einem Innenraum eines Behälters ein Druckausgleich zwischen dem Innenraum und der Umgebung des Behälters herbeigeführt werden soll.

Die Berstvorrichtung 108 umfasst vorliegend ein Wandungsbauteil 126. Das Wandungsbauteil 126 kann beispielsweise eine Wandung 106 eines Gehäuses 102 eines elektrochemischen Systems 100 oder eine Wandung 122, beispielsweise ein Abdeckelement 120, eines Gehäuses 114 einer elektrochemischen Zelle 110 vollständig bilden (vgl. Fig. 1 und 2).

Vorteilhaft kann es sein, wenn das Wandungsbauteil 126 ein metallisches Material umfasst oder daraus gebildet ist. Beispielsweise umfasst das Wandungsbauteil 126 Aluminium oder ist daraus gebildet.

Vorliegend ist das Wandungsbauteil 126 zumindest näherungsweise planar und/oder eben ausgebildet.

Das Wandungsbauteil 126 weist vorliegend einen Berststeg 128 auf, welcher in einem parallel zu einer Haupterstreckungsebene des Wandungsbauteils 126 genommenen Querschnitt zumindest näherungsweise oval, beispielsweise stadionförmig, ausgebildet ist.

Alternativ kann vorgesehen sein, dass der Berststeg 128 in einem parallel zu einer Haupterstreckungsebene des Wandungsbauteils 126 genommenen Querschnitt zumindest näherungsweise rechteckförmig ausgebildet ist (in Fig. 2 schematisch angedeutet).

Der Berststeg 128 kann alternativ eine von den genannten Formen abweichende Form aufweisen, wobei der Berststeg 128 in einem senkrecht zu der Haupterstreckungsebene des Wandungsbauteils 126 genommenen Querschnitt vorzugsweise eine Erstreckung aufweist, welche in einer Raumrichtung, beispielsweise um einen Faktor 2, größer ist als in einer senkrecht dazu verlaufenden Raumrichtung. Die Raumrichtungen verlaufen vorzugsweise parallel zu der Haupterstreckungsebene des Wandungsbauteils 126.

Es sind beispielsweise weitere polygonale Formen des Berststegs 128 denkbar (nicht zeichnerisch dargestellt).

Das Wandungsbauteil 126 kann auch mehrere Berststege 128 aufweisen (nicht zeichnerisch dargestellt).

Vorzugsweise beträgt ein Verhältnis einer Dicke des Wandungsbauteils 126 in einem den Berststeg 128, insbesondere von außen, umgebenden Bereich 152 zu einer Dicke des Berststegs 128 mindestens ca. 2:1 und/oder höchstens ca. 30:1.

Die Dicke des Wandungsbauteils 126 bezeichnet vorzugsweise eine Materialstärke, beispielsweise eine Ausgangsmaterialstärke, des Wandungsbauteils 126, insbesondere in einem Zustand vor einer Bearbeitung des Wandungsbauteils 126 und/oder in einem Zustand vor einem Einbringen des Berststegs 128.

Eine Dicke des Berststegs 128 bezeichnet vorzugsweise eine Materialstärke des Wandungsbauteils 126 im Bereich des Berststegs 128 und/oder eine Materialstärke des Wandungsbauteils 126 nach einer Bearbeitung und/oder nach einem Einbringen des Berststegs 128. Die Dicke des Berststegs 128 ist insbesondere eine minimale Dicke des Wandungsbauteils 126.

Der Berststeg 128 weist vorliegend entlang dessen Längsrichtung 130, welche vorliegend eine Umfangsrichtung 132 ist, eine variierende Dicke auf.

Ein Teil des Berststegs 128 bildet vorliegend eine Sollbruchstelle 134.

Gemäß alternativer Ausführungsformen bildet der Berststeg 128 als Ganzes eine Sollbruchstelle 134.

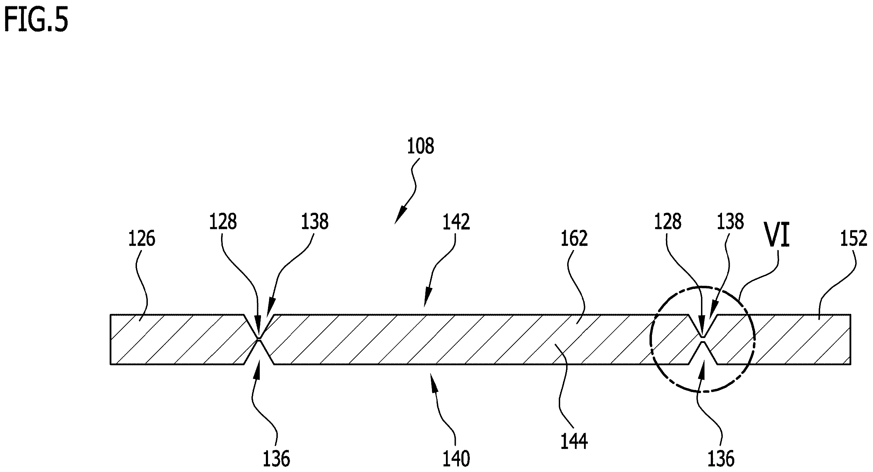

Wie insbesondere in den Fig. 5 bis 8 zu sehen ist, ist der Berststeg 128 durch eine erste Vertiefung 136 und eine zweite Vertiefung 138 in dem Wandungsbauteil 126 gebildet.

Die erste Vertiefung 136 und die zweite Vertiefung 138 sind beispielsweise schnurförmig und/oder linienförmig ausgebildet.

Die erste Vertiefung 136 und die zweite Vertiefung 138 sind vorzugsweise an einander gegenüberliegenden Seiten des Wandungsbauteils 126 angeordnet. Vorzugsweise weisen die erste Vertiefung 136 und die zweite Vertiefung 138 dieselbe Form und/oder dieselbe Einprägetiefe auf.

Die erste Vertiefung 136 ist vorzugsweise an einer ersten Seite 140 des Wandungsbauteils 126 angeordnet. Die zweite Vertiefung 138 ist vorzugsweise an einer der ersten Seite 140 des Wandungsbauteils 126 gegenüberliegenden und/oder von der ersten Seite 140 des Wandungsbauteils 126 abgewandten zweiten Seite 142 des Wandungsbauteils 126 angeordnet.

In Ausführungsformen, in welchen die Berstvorrichtung 108 einen Bestandteil eines Gehäuses 102 eines elektrochemischen Systems 100 bildet, bildet die erste Seite 140 des Wandungsbauteils 126 beispielsweise eine dem Innenraum 104 zugewandte Innenseite der Wandung 106 des elektrochemischen Systems 100. Die zweite Seite 142 bildet beispielsweise eine dem Innenraum 104 abgewandte Außenseite der Wandung 106.

In Ausführungsformen, in welchen die Berstvorrichtung 108 einen Bestandteil einer elektrochemischen Zelle 110 bildet, bildet die erste Seite 140 beispielsweise eine dem Innenraum 118 zugewandte Innenseite der Wandung 122. Die zweite Seite 142 bildet vorzugsweise eine dem Innenraum 118 abgewandte Außenseite der Wandung 122.

Vorteilhaft kann es sein, wenn ein Verhältnis einer Dicke des Wandungsbauteils 126 zu einer Breite des Berststegs 128 mindestens ca. 5:1, insbesondere mindestens ca. 10:1, beträgt.

Die Breite des Berststegs 128 ist vorzugsweise identisch mit einer Breite eines Bodenbereichs 156 der ersten Vertiefung 136 und/oder mit einer Breite eines Bodenbereichs 156 der zweiten Vertiefung 138.

Die Bodenbereiche 156 sind vorzugsweise diejenigen Bereiche, in welchen die Vertiefungen 136, 138 jeweils eine maximale Einprägetiefe aufweisen.

Vorliegend weist der Berststeg 128 eine, insbesondere ringförmig, geschlossene Form auf. Der Berststeg 128 umgibt vorliegend eine Berstfläche 144, welche beispielsweise eine Berstmembran bildet.

Wie in Fig. 3 durch eine gestrichelte Linie angedeutet ist, kann vorgesehen sein, dass der Berststeg 128 mehrteilig ausgebildet ist.

Beispielsweise weist der Berststeg 128 einen, beispielsweise geschlossenen, Berststegrand 146 und einen oder mehrere Trennberststege 148 auf, welche den Berststegrand 146 in mehrere Segmente unterteilen. Durch die Trennberststege 148 ist die Berstfläche 144 vorliegend in mehrere Berstflächenteile 150 unterteilt.

Für ein kontrolliertes Brechen und/oder Reißen des Berststegs 128 bei einem Übersteigen eines kritischen Drucks und/oder einer kritischen Temperatur in einem Innenraum eines Behälters, welcher teilweise von dem Wandungsbauteil 126 gebildet ist, kann es vorteilhaft sein, wenn eine Dicke der Berstfläche 144 und eine Dicke des Wandungsbauteils 126 in einem den Berststeg 128 (von außen) umgebenden Bereich 152 zumindest näherungsweise identisch ist.

Die erste Vertiefung 136 und die zweite Vertiefung 138 sind vorzugsweise durch Prägen in das Wandungsbauteil 126 eingebracht. Beispielsweise wird das Wandungsbauteil 126 zur Herstellung der Berstvorrichtung 108, insbesondere beidseitig, geprägt.

Durch das Prägen des Wandungsbauteils 126 sind aufwändige Montageprozesse zur Montage einer separaten Berstmembran insbesondere entbehrlich.

Vorliegend sind die erste Vertiefung 136 und die zweite Vertiefung 138 in einem senkrecht zur Haupterstreckungsebene des Wandungsbauteils 106 genommenen Querschnitt zumindest näherungsweise in Form eines gleichschenkligen Trapezes ausgebildet.

Beispielsweise weist ein Werkzeug, welches zum Einbringen der ersten Vertiefung 136 und der zweiten Vertiefung 138 verwendet wird, beispielsweise ein Prägewerkzeug, Elemente auf, deren Form komplementär zur Form der ersten Vertiefung 136 und der zweiten Vertiefung 138 ausgebildet ist. Diese Elemente werden vorzugsweise gleichzeitig in das Wandungsbauteil 126 hineingedrückt.

Alternativ zu einer Form eines gleichschenkligen Trapezes der ersten Vertiefung 136 und der zweiten Vertiefung 138 kann vorgesehen sein, dass die erste Vertiefung 136 und/oder die zweite Vertiefung 138 in einem senkrecht zur Haupterstreckungsebene des Wandungsbauteils 126 genommenen Querschnitt in Form eines gleichschenkligen Dreiecks, eines rechtwinkligen Dreiecks oder kreisbogenförmig ausgebildet sind (nicht zeichnerisch dargestellt).

Die erste Vertiefung 136 und die zweite Vertiefung 138 können auch voneinander abweichende Formen aufweisen (nicht zeichnerisch dargestellt).

Vorzugsweise sind die erste Vertiefung 136 und die zweite Vertiefung 138 jeweils von zwei Flankenbereichen 154 des Wandungsbauteils 126 gebildet, wobei die zwei Flankenbereiche 154 jeweils einen Bodenbereich 156 zwischen sich aufnehmen und/oder sich seitlich an den jeweiligen Bodenbereich 156 anschließen.

Vorzugsweise schließen Haupterstreckungsebenen der zwei Flankenbereiche 154 der ersten Vertiefung 136 einen Winkel von mindestens ca. 30° und/oder höchstens ca. 80° miteinander ein.

Haupterstreckungsebenen der zwei Flankenbereiche 154 der zweiten Vertiefung 138 schließen vorzugsweise einen Winkel von mindestens ca. 30° und/oder höchstens ca. 80° miteinander ein.

Der Berststeg 128 ist vorliegend durch den Bodenbereich 156 der ersten Vertiefung 136 und den Bodenbereich 156 der zweiten Vertiefung 138 gebildet.

Vorliegend liegt der Berststeg 128 zumindest näherungsweise in einer Mittelebene des Wandungsbauteils 126, insbesondere derart, dass der Berststeg 128 mittig zwischen der ersten Seite 140 und der zweiten Seite 142 des Wandungsbauteils 126 angeordnet ist.

Die Einprägetiefe im Bereich der ersten Vertiefung 136 und die Einprägetiefe im Bereich der zweiten Vertiefung 138 sind vorliegend identisch.

Gemäß einer (zeichnerisch nicht dargestellten) alternativen Ausführungsform kann vorgesehen sein, dass die Einprägetiefe im Bereich der ersten Vertiefung 136 um mindestens ca. 45 %, insbesondere um mindestens ca. 40 %, kleiner als die Einprägetiefe im Bereich der zweiten Vertiefung 138 ist oder anders herum.

Der Berststeg 128 umfasst vorliegend einen Halteabschnitt 158 und einen Bruchabschnitt 160.

Eine minimale Materialstärke des Berststegs 128 im Bruchabschnitt 160 ist vorliegend um mindestens ca. 10 %, insbesondere um mindestens ca. 30 %, geringer als eine minimale Materialstärke des Berststegs 128 im Halteabschnitt 158.

Der Bruchabschnitt 160 bildet vorliegend in einem parallel zur Haupterstreckungsebene des Wandungsbauteils 126 genommenen Querschnitt zumindest näherungsweise eine U-Form.

Der Halteabschnitt 158 ist vorzugsweise in einem parallel zur Haupterstreckungsebene des Wandungsbauteils 126 genommenen Querschnitt zumindest näherungsweise gewölbt ausgebildet und/oder verbindet freie Enden der Schenkel der U-Form des Bruchabschnitts 160.

Gemäß einer zeichnerisch nicht dargestellten Ausführungsform kann alternativ dazu, dass der Berststeg 128 eine geschlossene Form aufweist, vorgesehen sein, dass der Halteabschnitt 158 von einem an den Berststeg 128 angrenzenden Bereich des Wandungsbauteils 126 gebildet ist. Der Berststeg 128 bildet dann insbesondere als Ganzes den Bruchabschnitt 160 und/oder eine Sollbruchstelle 134.

Durch Wahl einer Dicke des Halteabschnitts 158 und/oder des Bruchabschnitts 160 ist vorzugsweise ein Berstdruck einstellbar, bei dessen Übersteigen ein Teil des Berststegs 128 oder der Berststeg 128 als Ganzes bricht und/oder reißt.

Ein Übergang von dem Halteabschnitt 158 zu dem Bruchabschnitt 160 kann stufenförmig oder durch einen Dickengradienten erfolgen.

Bei einem Übersteigen eines kritischen Drucks (Berstdrucks) und/oder einer kritischen Temperatur in einem Innenraum eines Behälters, welcher das Wandungsbauteil 126 umfasst, bricht und/oder reißt vorzugsweise der Bruchabschnitt 160 des Berststegs 128.

Die Berstfläche 144 wird bei und/oder nach dem Brechen und/oder Reißen des Bruchabschnitts 160 vorzugsweise von dem Innenraum weggedrückt und/oder nach außen geklappt.

So gelangt die Berstvorrichtung 108 von einem geschlossenen Zustand in einen geöffneten Zustand und/oder es kann Fluid von dem Innenraum des Behälters in die Umgebung ausströmen (nicht zeichnerisch dargestellt).

Der Halteabschnitt 158 bildet während einer Bewegung der Berstfläche 144 relativ zu einem den Berststeg 128 umgebenden Bereich 152 des Wandungsbauteils 126 vorzugsweise ein Scharnierelement und/oder eine Ablenklinie, um welche(s) die Berstfläche 144 bewegt und/oder verschwenkt wird.

Beispielsweise wird die Berstfläche 144 bei einem Öffnen der Berstvorrichtung 108 um den Halteabschnitt 158 umgelenkt und/oder herum geklappt.

Die Berstfläche 144 bildet während eines Öffnungsvorgangs und/oder in einem geöffneten Zustand der Berstvorrichtung 108 vorzugsweise ein Strömungsleitelement 162.

Das Strömungsleitelement 162 dient vorzugsweise einer Leitung von aus dem Behälter ausströmenden Fluids und/oder als Hitzeschild zur thermischen Ableitung und/oder Abschirmung.

Vorteilhaft kann es sein, wenn das Strömungsleitelement 162 in einem geöffneten Zustand der Berstvorrichtung 108 mit einer Haupterstreckungsebene des den Berststeg 128 umgebenden Bereichs 152 des Wandungsbauteils 126 einen Winkel von mindestens ca. 10° und/oder höchstens ca. 80° einschließt (nicht zeichnerisch dargestellt).

Der Halteabschnitt 158 bleibt bei einem Öffnungsvorgang der Berstvorrichtung 108 und/oder in einem geöffneten Zustand der Berstvorrichtung 108 im Vergleich zu dem geschlossenen Zustand der Berstvorrichtung 108 unverändert. Insbesondere bleibt eine Verbindung der Berstfläche 144 und des den Berststeg 128 umgebenden Bereichs 152 des Wandungsbauteils 126 im Bereich des Halteabschnitts 158 auch in einem geöffneten Zustand der Berstvorrichtung 108 bestehen.

Insbesondere zur Einstellung einer Öffnungsgeschwindigkeit kann es vorteilhaft sein, wenn ein Verhältnis einer Länge des Bruchabschnitts 160 zu einer Länge des Halteabschnitts 158 mindestens ca. 2:1 und/oder höchstens ca. 20:1 beträgt.

In Ausführungsformen, in welchen die Berstfläche 144 in mehrere Berstflächenteile 150 unterteilt ist, bilden der eine oder die mehreren Trennberststege 148 vorzugsweise einen oder mehrere Bestandteile des Bruchabschnitts 160. Beispielsweise weist der Berststeg 128 mehrere Halteabschnitte 158 auf, welche jeweils gewölbt ausgebildet sind und gerade verlaufende Abschnitte des Berststegs 128 miteinander verbinden. Die gerade verlaufenden Abschnitte des Berststegs 128 bilden insbesondere jeweils einen Bruchabschnitt 160.

Beispielsweise umfasst der Berststeg 128 mittig angeordnet einen als Bruchabschnitt 160 ausgebildeten Trennberststeg 148 (vgl. Fig. 3), welcher bei einem Übersteigen eines kritischen Drucks und/oder einer kritischen Temperatur in dem Innenraum des Behälters, welcher die Berstvorrichtung 108 umfasst, bricht und/oder reißt. Insbesondere klappen die Berstflächenteile 150 nach außen weg. Die Halteabschnitte 158 bilden beispielsweise jeweils ein Scharnierelement und/oder eine Ablenklinie, um welche die Bruchabschnitte 160 herumbewegt und/oder geschwenkt werden.

Beispielsweise werden die Berstflächenteile 150 bei einem Öffnungsvorgang der Berstvorrichtung 108 voneinander weg und/oder nach außen geklappt.

Vorteilhaft kann es sein, wenn ein Verhältnis eines durch die erste Vertiefung 136 und die zweite Vertiefung 138 gebildeten Volumens zu einem Volumen eines bearbeiteten Bereichs des Wandungsbauteils 126, in welchem die erste Vertiefung 136 und die zweite Vertiefung 138 angeordnet sind, mindestens ca. 1:2 und/oder höchstens ca. 4:1 beträgt.

Das durch die erste Vertiefung 136 und die zweite Vertiefung 138 gebildete Volumen ist vorzugsweise eine Summe aus jeweils von zwei Flankenbereichen 154 und dem dazwischen angeordneten Bodenbereich 156 begrenzten Volumina, welche jeweils durch eine Verlängerung der ersten Seite 140 bzw. der zweiten Seite 142 begrenzt sind.

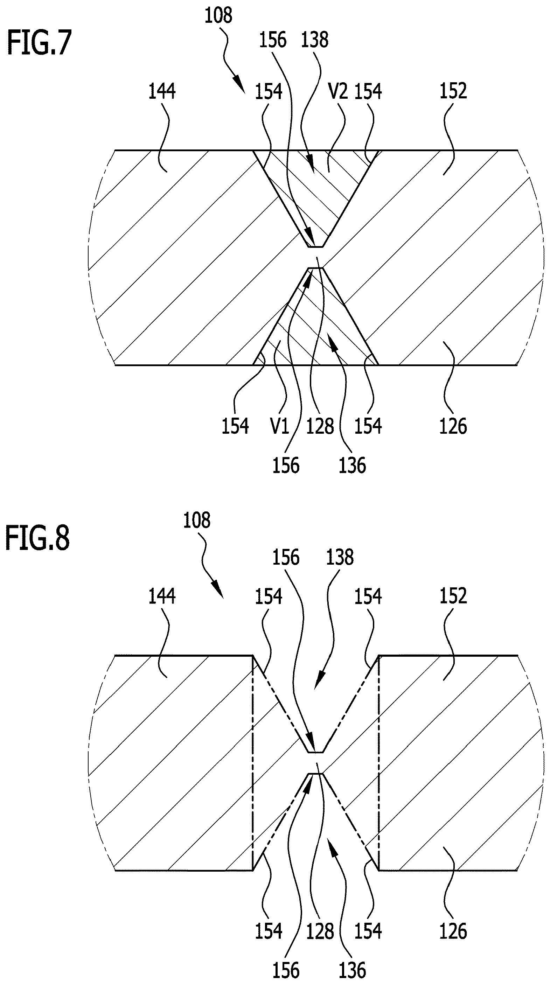

Das durch die erste Vertiefung 136 und die zweite Vertiefung 138 gebildete Volumen ist in Fig. 7 schraffiert dargestellt und mit V1 im Bereich der ersten Vertiefung 136 und mit V2 im Bereich der zweiten Vertiefung 138 bezeichnet.

Das durch die erste Vertiefung 136 gebildete Volumen V1 ist vorzugsweise ein Materialvolumen, welches zur Erzeugung der ersten Vertiefung 136 aus dem Wandungsbauteil 126 entfernt und/oder verdrängt wurde. Das durch die zweite Vertiefung 138 gebildete Volumen V2 ist vorzugsweise ein Materialvolumen, welches zur Erzeugung der zweiten Vertiefung 138 aus dem Wandungsbauteil 126 entfernt und/oder verdrängt wurde.

Der bearbeitete Bereich in dem Wandungsbauteil 126 ist in Fig. 8 durch eine strichpunktierte Linie eingezeichnet. Es handelt sich hierbei vorzugsweise um einen Bereich des Wandungsbauteils 126, auf welchen bei dem Einbringen der ersten Vertiefung 136 und der zweiten Vertiefung 138 Kraft ausgeübt wurde und/oder welcher unter einem Einfluss des Werkzeugs stand.

Zur Herstellung des elektrochemischen Systems 100 wird eine Wandung 106 bereitgestellt, in welche beidseitig Vertiefungen 136, 138 eingebracht, beispielsweise eingeprägt werden, insbesondere derart, dass mindestens ein Berststeg 128 gebildet wird.

Hierbei wird ein Werkzeug insbesondere derart eingestellt, dass die Vertiefungen 136, 138 entlang deren Längsrichtungen 130 jeweils eine variierende Dicke, beispielsweise zumindest zwei Abschnitte unterschiedlicher Einprägetiefe, aufweisen.

Anschließend wird die Wandung 106 vorzugsweise mit einem weiteren Gehäusebauteil, insbesondere fluiddicht, verbunden, beispielsweise verschweißt.

Eine elektrochemische Zelle 110 wird vorzugsweise hergestellt, indem beidseitig Vertiefungen 136, 138 in eine Wandung 122 eingebracht, beispielsweise eingeprägt, werden. Durch das Prägen ist insbesondere mindestens ein Berststeg 128 gebildet. Die Wandung 122 bildet in einem montierten Zustand der elektrochemischen Zelle 110 vorzugsweise ein Abdeckelement 120.

Eine Einprägetiefe wird hierbei vorzugsweise entlang einer Längsrichtung 130 der ersten Vertiefung 136 und entlang einer Längsrichtung 130 der zweiten Vertiefung 138 variiert. Insbesondere werden zumindest zwei Abschnitte ausgebildet, im Bereich derer die erste Vertiefung 136 und/oder die zweite Vertiefung voneinander abweichende Einprägetiefen aufweist.

Nach dem Prägen wird die Wandung 122 vorzugsweise mit einem, beispielsweise becherförmigen, Gehäusebauteil 112 verbunden, beispielsweise verschweißt. Insbesondere ist so ein Gehäuse 114 der elektrochemischen Zelle 110 gebildet, welches in einem geschlossenen Zustand der Berstvorrichtung 108 fluiddicht verschlossen ist.

Durch die Berstvorrichtung 108 wird vorzugsweise eine Berstvorrichtung bereitgestellt, welche ein kontrolliertes Bruchverhalten zeigt.

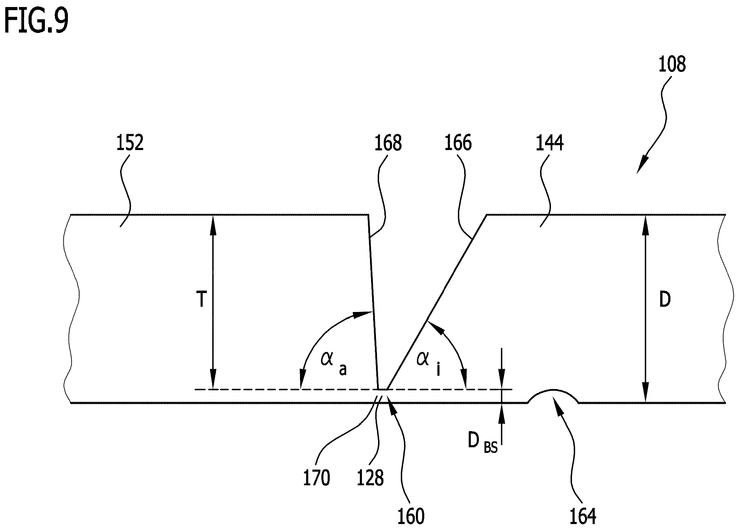

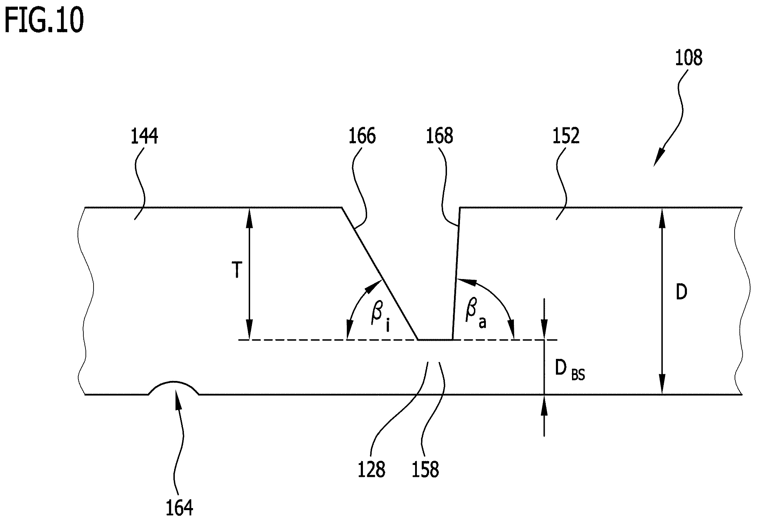

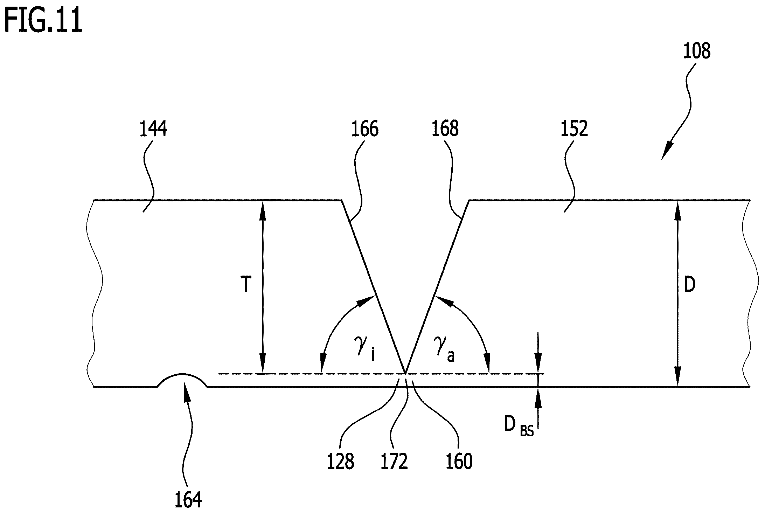

Eine in den Fig. 9 bis 11 dargestellte alternative Ausführungsform einer Berstvorrichtung 108 unterscheidet sich von den anderen dargestellten Ausführungsformen insbesondere dadurch, dass eine nur einseitige (Haupt-)Prägung zur Herstellung des Berststegs 128 vorgesehen ist.

Alternativ hierzu kann ferner vorgesehen sein, dass eine beidseitige Prägung zur Herstellung des Berststegs 128 dient, wobei die Einprägetiefen T auf den beiden Seiten unterschiedlich sind. Insbesondere kann vorgesehen sein, dass eine Einprägetiefe T zur Herstellung des Berststegs 128 zumindest abschnittsweise oder vollständig umlaufend an einer Seite mindestens ungefähr das Doppelte, vorzugsweise mindestens ungefähr das Fünffache, beispielsweise mindestens ungefähr das Zehnfache, einer Einprägetiefe T an der weiteren Seite beträgt.

Ferner kann alternativ oder ergänzend zu einer einseitigen oder beidseitigen Prägung, insbesondere zusätzlich zu einer einseitigen oder beidseitigen Prägung zur Herstellung des Berststegs, eine Verformung oder Formgebung zur Herstellung einer Ringzacke 164 vorgesehen sein. Hierdurch kann insbesondere eine optimierte Positionierung und/oder Führung während der Herstellung des Berstelements 128 ermöglicht werden.

Günstig kann es sein, wenn die erste Vertiefung 136, insbesondere die einzige Vertiefung 136, einen eine Innenflanke 166 bildenden Flankenbereich 154 und einen eine Außenflanke 168 bildenden Flankenbereich 154 umfasst.

Die Innenflanke 166 ist der Berstfläche 144 zugewandt angeordnet. Die Außenflanke ist auf der der Berstfläche 144 abgewandten Seite des Berststegs 128 angeordnet.

Vorteilhaft kann es sein, wenn die Innenflanke 166 und/oder die Außenflanke 168 an unterschiedlichen Stellen längs des Berststegs 128 variierende Winkel mit einer Hauptfläche und/oder Mittelebene des Berstelements 108 einschließen.

Beispielsweise kann es vorgesehen sein, dass in einem Bruchabschnitt 160 des Berststegs 128, insbesondere in einem einem Halteabschnitt 158 gegenüberliegenden Gegengeradenabschnitt 170, welcher einen insbesondere geraden Bruchabschnitt 160 bildet, ein Winkel αₐ (alpha a) zwischen der Außenflanke 168 und der Hauptfläche und/oder Mittelebene des Berstelements 108 mindestens ungefähr 60°, vorzugsweise mindestens ungefähr 80°, insbesondere mindestens ungefähr 85°, und/oder höchstens ungefähr 90°, vorzugsweise höchstens ungefähr 89°, beträgt. Beispielsweise beträgt der Winkel ungefähr 88°.

Ferner kann vorgesehen sein, dass in dem Bruchabschnitt 160 des Berststegs 128, insbesondere in dem dem Halteabschnitt 158 gegenüberliegenden Gegengeradenabschnitt 170, welcher einen insbesondere geraden Bruchabschnitt 160 bildet, ein Winkel αᵢ (alpha i) zwischen der Innenflanke 166 und der Hauptfläche und/oder Mittelebene des Berstelements 108 mindestens ungefähr 35°, vorzugsweise mindestens ungefähr 40°, insbesondere mindestens ungefähr 50°, und/oder höchstens ungefähr 75°, vorzugsweise höchstens ungefähr 65°, beträgt. Beispielsweise beträgt der Winkel ungefähr 60°.

Beispielsweise kann es vorgesehen sein, dass in einem Halteabschnitt 158 des Berststegs 128 ein Winkel βₐ (beta a) zwischen der Außenflanke 168 und der Hauptfläche und/oder Mittelebene des Berstelements 108 mindestens ungefähr 60°, vorzugsweise mindestens ungefähr 80°, insbesondere mindestens ungefähr 85°, und/oder höchstens ungefähr 90°, vorzugsweise höchstens ungefähr 89°, beträgt. Beispielsweise beträgt der Winkel ungefähr 88°.

Ferner kann vorgesehen sein, dass in dem Halteabschnitt 158 des Berststegs 128 ein Winkel βᵢ (beta i) zwischen der Innenflanke 166 und der Hauptfläche und/oder Mittelebene des Berstelements 108 mindestens ungefähr 35°, vorzugsweise mindestens ungefähr 40°, insbesondere mindestens ungefähr 50°, und/oder höchstens ungefähr 75°, vorzugsweise höchstens ungefähr 65°, beträgt. Beispielsweise beträgt der Winkel ungefähr 60°.

Beispielsweise kann vorgesehen sein, dass in einem oder in zwei Kurvenabschnitten 172 des Berststegs 128, welche einen Bruchabschnitt 160 bilden und insbesondere jeweils einen Halteabschnitt 158 mit einem Gegengeradenabschnitt 170 verbinden, ein Winkel γₐ (gamma a) zwischen der Außenflanke 168 und der Hauptfläche und/oder Mittelebene des Berstelements 108 mindestens ungefähr 30°, vorzugsweise mindestens ungefähr 40°, insbesondere mindestens ungefähr 50°, und/oder höchstens ungefähr 80°, vorzugsweise höchstens ungefähr 70°, beträgt. Beispielsweise beträgt der Winkel ungefähr 60°.

Ferner kann vorgesehen sein, dass in einem oder in zwei Kurvenabschnitten 172 des Berststegs 128, welche einen Bruchabschnitt 160 bilden und insbesondere jeweils einen Halteabschnitt 158 mit einem Gegengeradenabschnitt 170 verbinden, ein Winkel γᵢ (gamma i) zwischen der Innenflanke 166 und der Hauptfläche und/oder Mittelebene des Berstelements 108 mindestens ungefähr 30°, vorzugsweise mindestens ungefähr 40°, insbesondere mindestens ungefähr 50°, und/oder höchstens ungefähr 80°, vorzugsweise höchstens ungefähr 70°, beträgt. Beispielsweise beträgt der Winkel ungefähr 60°.

Der Winkel αᵢ (alpha i) ist vorzugsweise kleiner als der Winkel αₐ (alpha a). Alternativ oder ergänzend hierzu kann vorgesehen sein, dass der Winkel βᵢ (beta i) kleiner ist als der Winkle βₐ (beta a).

Der Winkel γᵢ (gamma i) ist vorzugsweise zumindest näherungsweise gleich dem Winkel γₐ (gamma a).

Durch die beschriebene Winkelwahl kann insbesondere eine optimierte und zuverlässige Öffnung des Berstelements 108 ermöglicht werden, wobei vorzugsweise ferner ein vollständiges Ablösen der Berstfläche 144 von dem umgebenden Bereich 152 vermieden werden kann. Ferner kann vorzugsweise ein gewünschter Öffnungswinkel der Berstfläche 144 eingestellt werden, wobei der Öffnungswinkel angibt, um welchen Winkel die Berstfläche 144 um den Halteabschnitt 158 rotiert, bis sie in einer Offenstellung angelangt.

Wie den Fig. 9 bis 11 ferner zu entnehmen ist, kann es vorgesehen sein, dass die Dicke D_{BS} des Berststegs 128 in den Bruchabschnitten 160 geringer ist als im Halteabschnitt 158.

Zudem ist der Berststeg 128 im Halteabschnitt 158 vorzugsweise breiter ausgebildet, was insbesondere dadurch erhältlich ist, dass ein Prägewerkzeug zur Herstellung des Berstelements 108 weitestgehend ähnlich geformte Flanken wie im Gegengeradenabschnitt 170 aufweist, an seinem den Berststeg 128 definierenden Ende jedoch abgeflacht und/oder verkürzt ausgebildet ist.

Erfindungsgemäß kann zu der in den Fig. 9 bis 11 dargestellten einseitigen Prägung eine Gegenprägung mit geringer Einprägetiefe T vorgesehen sein.

Grundsätzlich eignen sich die vorstehend genannten Angaben zur Optimierung jeder Vertiefung 136 und/oder 138.

## Patentansprüche

1. Elektrochemische Zelle (110), umfassend:
- ein Gehäuse (114), welches einen Innenraum (118) der elektrochemischen Zelle (110) umgibt; und
- eine Berstvorrichtung (108), welche an einer Wandung (122) des Gehäuses (114) angeordnet ist und insbesondere einstückig mit der Wandung (122) ausgebildet ist,
wobei die Berstvorrichtung (108) mindestens einen Berststeg (128) umfasst, wobei der mindestens eine Berststeg (128) eine in Längsrichtung (130) variierende Dicke aufweist und wobei der mindestens eine Berststeg (128) durch mindestens eine erste Vertiefung (136), welche an einer dem Innenraum (118) zugewandten Innenseite der Wandung (122) angeordnet ist, und mindestens eine zweite Vertiefung (138), welche an einer dem Innenraum (118) abgewandten Außenseite der Wandung (122) angeordnet ist, gebildet ist,
wobei der mindestens eine Berststeg (128) durch Prägen gebildet ist, insbesondere durch Prägen eines nicht vorbearbeiteten Bereichs der Wandung (122).

2. Elektrochemische Zelle (110) nach Anspruch 1, **dadurch gekennzeichnet, dass** der mindestens eine Berststeg (128), welcher eine in Längsrichtung (130) variierende Dicke aufweist, durch eine Vertiefung (136) gebildet ist, welche an der dem Innenraum (118) zugewandten Innenseite der Wandung (122) angeordnet ist, insbesondere in diese eingeprägt ist.

3. Elektrochemische Zelle (110) nach Anspruch 1 oder 2, **dadurch gekennzeichnet, dass** der mindestens eine Berststeg (128) mindestens einen Bruchabschnitt (160) aufweist, welcher bei einem Übersteigen eines kritischen Drucks und/oder einer kritischen Temperatur im Innenraum (118) der elektrochemischen Zelle (110) bricht und/oder reißt, und dass der mindestens eine Berststeg (128) mindestens einen Halteabschnitt (158) aufweist, welcher bei einem Übersteigen eines kritischen Drucks und/oder einer kritischen Temperatur im Innenraum (118) der elektrochemischen Zelle (110) eine Verbindung zwischen einer von dem mindestens einen Berststeg (128) umgebenen Berstfläche (144) und einem den mindestens einen Berststeg umgebenden Bereich (152) der Wandung (122) aufrechterhält und um welchen die Berstfläche (144) bewegbar, insbesondere verschwenkbar, ist,
wobei eine minimale Materialstärke des mindestens einen Beststegs (128) im mindestens einen Bruchabschnitt (160) um mindestens ca. 10 % geringer als eine minimale Materialstärke des mindestens einen Berststegs (128) im mindestens einen Halteabschnitt (158) ist.

4. Elektrochemische Zelle (110) nach Anspruch 3, **dadurch gekennzeichnet, dass** eine minimale Materialstärke des mindestens einen Beststegs (128) im mindestens einen Bruchabschnitt (160) um mindestens ca. 30 % geringer als eine minimale Materialstärke des mindestens einen Berststegs (128) im mindestens einen Halteabschnitt (158) ist.

5. Elektrochemische Zelle (110) nach einem der Ansprüche 1 bis 4, **dadurch gekennzeichnet, dass** eine von mindestens einem Bruchabschnitt (160) umgebene Berstfläche (144) in einem geöffneten Zustand der Berstvorrichtung (108) ein Strömungsleitelement (162) für aus dem Innenraum (118) der elektrochemischen Zelle (110) ausströmendes Fluid bildet, wobei vorzugsweise die Berstfläche (144) mit einer Haupterstreckungsebene der Wandung (122) einen Öffnungswinkel von mindestens ca. 10° und/oder höchstens ca. 80° einschließt.

6. Elektrochemische Zelle (110) nach einem der Ansprüche 1 bis 5, **dadurch gekennzeichnet, dass** der mindestens eine Berststeg (128) eine, insbesondere ringförmig, geschlossene Form aufweist und beispielsweise in einem parallel zu einer Haupterstreckungsebene der Wandung (122) genommenen Querschnitt zumindest näherungsweise oval oder zumindest näherungsweise rechteckförmig ausgebildet ist.

7. Elektrochemische Zelle (110) nach einem der Ansprüche 1 bis 6, **dadurch gekennzeichnet, dass** ein Verhältnis einer Länge mindestens eines Bruchabschnitts (160) des mindestens einen Berststegs (128) zu einer Länge mindestens eines Halteabschnitts (158) des mindestens einen Berststegs (128) mindestens 2:1 und/oder höchstens 20:1 beträgt.

8. Elektrochemische Zelle (110) nach einem der Ansprüche 1 bis 7, **dadurch gekennzeichnet, dass** mindestens ein Bruchabschnitt (160) des mindestens einen Berststegs (128) in einem parallel zu einer Haupterstreckungsebene der Wandung (122) genommenen Querschnitt zumindest näherungsweise eine U-Form bildet und dass mindestens ein Halteabschnitt (158) des mindestens einen Berststegs (128) Schenkel der U-Form zu einer geschlossenen Form, beispielsweise zu einem geschlossenen Oval, verbindet.

9. Elektrochemische Zelle (110) nach einem der Ansprüche 1 bis 8, **dadurch gekennzeichnet, dass** die mindestens eine erste Vertiefung (136) und/oder die mindestens eine zweite Vertiefung (138) in einem senkrecht zu einer Haupterstreckungsebene der Wandung (122) genommenen Querschnitt zumindest näherungsweise dreieckförmig, in Form eines gleichschenkligen Trapezes oder kreisbogenförmig sind.

10. Elektrochemische Zelle (110) nach einem der Ansprüche 1 bis 9, **dadurch gekennzeichnet, dass** die mindestens eine erste Vertiefung (136) und/oder die mindestens eine zweite Vertiefung (138) in einem senkrecht zu einer Haupterstreckungsebene der Wandung (122) genommenen Querschnitt zumindest näherungsweise in Form eines gleichschenkligen Trapezes oder kreisbogenförmig sind.

11. Verfahren zur Herstellung einer elektrochemischen Zelle (110) nach einem der Ansprüche 1 bis 10, wobei das Verfahren Folgendes umfasst:
- Bereitstellen einer Wandung (122) eines Gehäuses (114) einer elektrochemischen Zelle (110), insbesondere eines Abdeckelements (120);
- Einbringen mindestens eines Berststegs (128) in die Wandung (122), wobei der mindestens eine Berststeg (128) eine in Längsrichtung (130) variierende Dicke aufweist; und
- Einbringen mindestens einer ersten Vertiefung (136) an einer ersten Seite (140) der Wandung (122) und, insbesondere gleichzeitig, Einbringen mindestens einer zweiten Vertiefung (138) an einer der ersten Seite (140) der Wandung (122) abgewandten zweiten Seite (142) der Wandung (122), wodurch der mindestens eine Berststeg (128) gebildet wird;
- Verbinden der Wandung (122) mit einem oder mehreren weiteren Gehäusebauteilen (112), sodass ein Innenraum (118) der elektrochemischen Zelle (110) von dem Gehäuse (114) umgeben ist,
wobei der mindestens eine Berststeg (128) in die Wandung (122) der elektrochemischen Zelle (110) eingeprägt wird.

12. Elektrochemisches System (100),
umfassend mehrere elektrochemische Zellen (110), wobei die mehreren elektrochemischen Zellen (110) umfassen:
- ein Gehäuse (114), welches einen Innenraum (118) der jeweiligen elektrochemischen Zelle (110) umgibt; und
- eine Berstvorrichtung (108), welche an einer Wandung (122) des Gehäuses (114) angeordnet ist und insbesondere einstückig mit der Wandung (122) ausgebildet ist,
wobei die Berstvorrichtung (108) mindestens einen Berststeg (128) umfasst, wobei der mindestens eine Berststeg (128) eine in Längsrichtung (130) variierende Dicke aufweist und/oder wobei der mindestens eine Berststeg (128) durch mindestens eine erste Vertiefung (136), welche an einer dem Innenraum (118) zugewandten Innenseite der Wandung (122) angeordnet ist, und mindestens eine zweite Vertiefung (138), welche an einer dem Innenraum (118) abgewandten Außenseite der Wandung (122) angeordnet ist, gebildet ist,
wobei
- die mehreren elektrochemischen Zellen (110) mehrere elektrochemische Zellen (110) nach einem der Ansprüche 1 bis 10 sind
und/oder
- das elektrochemische System umfasst:
- ein Gehäuse (102), welches einen Innenraum (104) des elektrochemischen Systems (100) umgibt; und
- eine Berstvorrichtung (108), welche an einer Wandung (106) des Gehäuses (102) angeordnet ist und insbesondere einstückig mit der Wandung (106) ausgebildet ist,
wobei die Berstvorrichtung (108) mindestens einen Berststeg (128) umfasst, wobei der mindestens eine Berststeg (128) eine in Längsrichtung (130) variierende Dicke aufweist und wobei der mindestens eine Berststeg (128) durch mindestens eine erste Vertiefung (136), welche an einer dem Innenraum (104) zugewandten Innenseite der Wandung (106) des elektrochemischen Systems (100) angeordnet ist, und mindestens eine zweite Vertiefung (138), welche an einer dem Innenraum (104) abgewandten Außenseite der Wandung (106) des elektrochemischen Systems (100) angeordnet ist, gebildet ist,
wobei der mindestens eine Berststeg durch Prägen gebildet ist.

13. Verfahren zur Herstellung eines elektrochemischen Systems (100) nach Anspruch 12, wobei das Verfahren Folgendes umfasst:
- Bereitstellen einer Wandung (106) eines Gehäuses (102) eines elektrochemischen Systems (100);
- Einbringen mindestens eines Berststegs (128) in die Wandung (106), wobei der mindestens eine Berststeg (128) eine in Längsrichtung (130) variierende Dicke aufweist; und
- Einbringen mindestens einer ersten Vertiefung (136) an einer ersten Seite (140) der Wandung (106) und, insbesondere gleichzeitig, Einbringen mindestens einer zweiten Vertiefung (138) an einer der ersten Seite (140) der Wandung (106) abgewandten zweiten Seite (142) der Wandung (106), wodurch der mindestens eine Berststeg (128) gebildet wird;
- Verbinden der Wandung (106) mit einem oder mehreren weiteren Gehäusebauteilen, sodass ein Innenraum (104) des elektrochemischen Systems (100) von dem Gehäuse (102) umgeben ist,
wobei der mindestens eine Berststeg (128) in die Wandung (106) des elektrochemischen Systems (100) eingeprägt wird.

## Claims

1. Electrochemical cell (110), comprising:
- a housing (114) which surrounds an interior (118) of the electrochemical cell (110); and
- a rupture device (108) which is arranged on a wall (122) of the housing (114) and in particular is formed in one piece with the wall (122),
wherein the rupture device (108) comprises at least one rupture web (128), wherein the at least one rupture web (128) has a thickness which varies in the longitudinal direction (130), and wherein the at least one rupture web (128) is formed by at least one first depression (136) which is arranged on an inner side of the wall (122), the inner side facing the interior (118), and at least one second depression (138) which is arranged on an outer side of the wall (122), the outer side facing away from the interior (118),
wherein the at least one rupture web (128) is formed by embossing, in particular by embossing a non-pre-machined region of the wall (122).

2. Electrochemical cell (110) according to Claim 1, **characterized in that** the at least one rupture web (128), which has a thickness which varies in the longitudinal direction (130), is formed by a depression (136) which is arranged on the inner side of the wall (122), the inner side facing the interior (118), in particular is embossed into it.

3. Electrochemical cell (110) according to Claim 1 or 2, **characterized in that** the at least one rupture web (128) has at least one breaking portion (160) which breaks and/or tears when a critical pressure and/or a critical temperature in the interior (118) of the electrochemical cell (110) is exceeded, and **in that** the at least one rupture web (128) has at least one retaining portion (158) which, when a critical pressure and/or a critical temperature in the interior (118) of the electrochemical cell (110) is exceeded, maintains a connection between a rupture surface (144), which is surrounded by the at least one rupture web (128), and a region (152) of the wall (122), the region surrounding the at least one rupture web, and around which the rupture surface (144) can be moved, in particular pivoted,
wherein a minimum material thickness of the at least one rupture web (128) in the at least one breaking portion (160) is at least about 10% less than a minimum material thickness of the at least one rupture web (128) in the at least one retaining portion (158).

4. Electrochemical cell (110) according to Claim 3, **characterized in that** a minimum material thickness of the at least one rupture web (128) in the at least one breaking portion (160) is at least approximately 30% less than a minimum material thickness of the at least one rupture web (128) in the at least one retaining portion (158).

5. Electrochemical cell (110) according to one of Claims 1 to 4, **characterized in that** a rupture surface (144) surrounded by at least one breaking portion (160) forms, in an open state of the rupture device (108), a flow guiding element (162) for fluid flowing out of the interior (118) of the electrochemical cell (110), wherein the rupture surface (144) preferably includes an opening angle of at least approximately 10° and/or at most approximately 80° with a main plane of extent of the wall (122).

6. Electrochemical cell (110) according to one of Claims 1 to 5, **characterized in that** the at least one rupture web (128) has an, in particular annularly, closed shape and is at least approximately oval or at least approximately rectangular in a cross section parallel to a main plane of extent of the wall (122), for example.

7. Electrochemical cell (110) according to one of Claims 1 to 6, **characterized in that** a ratio of a length of at least one rupture portion (160) of the at least one rupture web (128) to a length of at least one retaining portion (158) of the at least one rupture web (128) is at least 2:1 and/or at most 20:1.

8. Electrochemical cell (110) according to one of Claims 1 to 7, **characterized in that** at least one breaking portion (160) of the at least one rupture web (128) at least approximately forms a U shape in a cross section parallel to a main plane of extent of the wall (122), and **in that** at least one retaining portion (158) of the at least one rupture web (128) connects limbs of the U shape to form a closed shape, for example to form a closed oval.

9. Electrochemical cell (110) according to one of Claims 1 to 8, **characterized in that**, in a cross section perpendicular to a main plane of extent of the wall (122), the at least one first depression (136) and/or the at least one second depression (138) are/is at least approximately triangular, in the form of an isosceles trapezium or circular-arc-shaped.

10. Electrochemical cell (110) according to one of Claims 1 to 9, **characterized in that**, in a cross section perpendicular to a main plane of extent of the wall (122), the at least one first depression (136) and/or the at least one second depression (138) are/is at least approximately in the form of an isosceles trapezium or circular-arc-shaped.

11. Method for producing an electrochemical cell (110) according to one of Claims 1 to 10, wherein the method comprises the following:
- providing a wall (122) of a housing (114) of an electrochemical cell (110), in particular a covering element (120);
- forming at least one rupture web (128) in the wall (122), wherein the at least one rupture web (128) has a thickness which varies in the longitudinal direction (130); and
- forming at least one first depression (136) on a first side (140) of the wall (122) and, in particular simultaneously, forming at least one second depression (138) on a second side (142) of the wall (122), the second side facing away from the first side (140) of the wall (122), whereby the at least one rupture web (128) is formed;
- connecting the wall (122) to one or more other housing components (112), so that an interior (118) of the electrochemical cell (110) is surrounded by the housing (114),
wherein the at least one rupture web (128) is embossed into the wall (122) of the electrochemical cell (110).

12. Electrochemical system (100),
comprising a plurality of electrochemical cells (110), wherein the plurality of electrochemical cells (110) comprise:
- a housing (114) which surrounds an interior (118) of the respective electrochemical cell (110); and
- a rupture device (108) which is arranged on a wall (122) of the housing (114) and in particular is formed in one piece with the wall (122),
wherein the rupture device (108) comprises at least one rupture web (128),
wherein the at least one rupture web (128) has a thickness which varies in the longitudinal direction (130) and/or wherein the at least one rupture web (128) is formed by at least one first depression (136) which is arranged on an inner side of the wall (122), the inner side facing the interior (118), and at least one second depression (138) which is arranged on an outer side of the wall (122), the outer side facing away from the interior (118),
wherein
- the plurality of electrochemical cells (110) are a plurality of electrochemical cells (110) according to one of Claims 1 to 10
and/or
- the electrochemical system comprises:
- a housing (102) which surrounds an interior (104) of the electrochemical system (100); and
- a rupture device (108) which is arranged on a wall (106) of the housing (102) and in particular is formed in one piece with the wall (106),
wherein the rupture device (108) comprises at least one rupture web (128),
wherein the at least one rupture web (128) has a thickness which varies in the longitudinal direction (130) and wherein the at least one rupture web (128) is formed by at least one first depression (136) which is arranged on an inner side of the wall (106) of the electrochemical system (100), the inner side facing the interior (104), and at least one second depression (138) which is arranged on an outer side of the wall (106) of the electrochemical system (100), the outer side facing away from the interior (104),
wherein the at least one rupture web is formed by embossing.

13. Method for producing an electrochemical system (100) according to Claim 12, wherein the method comprises the following:
- providing a wall (106) of a housing (102) of an electrochemical system (100);
- forming at least one rupture web (128) in the wall (106), wherein the at least one rupture web (128) has a thickness which varies in the longitudinal direction (130); and
- forming at least one first depression (136) on a first side (140) of the wall (106) and, in particular simultaneously, forming at least one second depression (138) on a second side (142) of the wall (106), the second side facing away from the first side (140) of the wall (106), whereby the at least one rupture web (128) is formed;
- connecting the wall (106) to one or more other housing components, so that an interior (104) of the electrochemical system (100) is surrounded by the housing (102),
wherein the at least one rupture web (128) is embossed into the wall (106) of the electrochemical system (100).

## Revendications

1. Cellule électrochimique (110), comprenant :
- un boîtier (114) qui entoure une chambre interne (118) de la cellule électrochimique (110) ; et
- un dispositif d'éclatement (108) qui est agencé au niveau d'une paroi (122) du boîtier (114) et en particulier réalisé d'une seule pièce avec la paroi (122),
le dispositif d'éclatement (108) comprenant au moins une entretoise d'éclatement (128), ladite au moins une entretoise d'éclatement (128) présentant une épaisseur variant dans la direction longitudinale (130) et ladite au moins une entretoise d'éclatement (128) étant formée par au moins un premier renfoncement (136), qui est agencé au niveau d'une face interne, orientée vers la chambre interne (118), de la paroi (122), et par au moins un deuxième renfoncement (138), qui est agencé au niveau d'une face externe, orientée à l'opposé de la chambre interne (118), de la paroi (122),
ladite au moins une entretoise d'éclatement (128) étant formée par estampage, en particulier par estampage d'une zone non prétraitée de la paroi (122).

2. Cellule électrochimique (110) selon la revendication 1, **caractérisée en ce que** ladite au moins une entretoise d'éclatement (128), qui présente une épaisseur variant dans la direction longitudinale (130), est formée par un renfoncement (136) qui est agencé au niveau de la face interne, orientée vers la chambre interne (118), de la paroi (122), en particulier estampé dans celle-ci.

3. Cellule électrochimique (110) selon la revendication 1 ou 2, **caractérisée en ce que** ladite au moins une entretoise d'éclatement (128) présente au moins une section de rupture (160), qui se rompt et/ou se déchire lors d'un passage au-dessus d'une pression critique et/ou d'une température critique dans la chambre interne (118) de la cellule électrochimique (110) et **en ce que** ladite au moins une entretoise d'éclatement (128) présente au moins une section de maintien (158), qui maintient, lors d'un passage au-dessus d'une pression critique et/ou d'une température critique dans la chambre interne (118) de la cellule électrochimique (110), une liaison entre une surface d'éclatement (144) entourée par ladite au moins une entretoise d'éclatement (128) et une zone (152), entourant ladite au moins une entretoise d'éclatement, de la paroi (122) et autour de laquelle la surface d'éclatement (144) est mobile, en particulier de manière pivotante,
une épaisseur minimale de matériau de ladite au moins une entretoise d'éclatement (128) dans au moins une section de rupture (160) étant inférieure d'au moins environ 10% à une épaisseur minimale de matériau de ladite au moins une entretoise d'éclatement (128) dans au moins une section de maintien (158).

4. Cellule électrochimique (110) selon la revendication 3, **caractérisée en ce qu'**une épaisseur minimale de matériau de ladite au moins une entretoise d'éclatement (128) dans au moins une section de rupture (160) est inférieure d'au moins environ 30% à une épaisseur minimale de matériau de ladite au moins une entretoise d'éclatement (128) dans au moins une section de maintien (158).

5. Cellule électrochimique (110) selon l'une des revendications 1 à 4, **caractérisée en ce qu'**une surface d'éclatement (144) entourée par au moins une section de rupture (160) forme, dans un état ouvert du dispositif d'éclatement (108), un élément de guidage d'écoulement (162) pour un fluide s'écoulant hors de la chambre interne (118) de la cellule électrochimique (110), la surface d'éclatement (144) formant, avec un plan d'extension principal de la paroi (122), de préférence un angle d'ouverture d'au moins environ 10° et/ou d'au plus environ 80°.

6. Cellule électrochimique (110) selon l'une des revendications 1 à 5, **caractérisée en ce que** ladite au moins une entretoise d'éclatement (128) présente une forme fermée, en particulier annulaire, et est réalisée, dans une coupe transversale prise parallèlement à un plan d'extension principal de la paroi (122), par exemple au moins approximativement de manière ovale ou au moins approximativement de manière rectangulaire.

7. Cellule électrochimique (110) selon l'une des revendications 1 à 6, **caractérisée en ce qu'**un rapport d'une longueur d'au moins une section de rupture (160) de ladite au moins une entretoise d'éclatement (128) à une longueur d'au moins une section de maintien (158) de ladite au moins une entretoise d'éclatement (128) représente au moins 2:1 et/ou au plus 20:1.

8. Cellule électrochimique (110) selon l'une des revendications 1 à 7, **caractérisée en ce qu'**au moins une section de rupture (160) de ladite au moins une entretoise d'éclatement (128) forme, dans une coupe transversale prise parallèlement un plan d'extension principal de la paroi (122), au moins approximativement une forme en U et **en ce qu'**au moins une section de maintien (158) de ladite au moins une entretoise d'éclatement (128) relie les branches de la forme en U en une forme fermée, par exemple en un ovale fermé.

9. Cellule électrochimique éclatement (110) selon l'une des revendications 1 à 8, **caractérisée en ce que** ledit au moins un premier renfoncement (136) et/ou ledit au moins un deuxième renfoncement (138) est/sont, dans une coupe transversale prise perpendiculairement à un plan d'extension principal de la paroi (122), au moins approximativement triangulaire(s), sous la forme d'un trapèze isocèle ou d'un arc de cercle.

10. Cellule électrochimique (110) selon l'une des revendications 1 à 9, **caractérisée en ce que** ledit au moins un premier renfoncement (136) et/ou ledit au moins un deuxième renfoncement (138) se présente(nt), dans une coupe transversale prise perpendiculairement à un plan d'extension principal de la paroi (122), au moins approximativement sous la forme d'un trapèze isocèle ou d'arc de cercle.

11. Procédé de fabrication d'une cellule électrochimique (110) selon l'une des revendications 1 à 10, le procédé comprenant ce qui suit :
- mise à disposition d'une paroi (122) d'un boîtier (114) d'une cellule électrochimique (110), en particulier d'un élément de recouvrement (120) ;
- incorporation d'au moins une entretoise d'éclatement (128) dans la paroi (122), ladite au moins une entretoise d'éclatement (128) présentant une épaisseur variant dans la direction longitudinale (130) ; et
- incorporation au moins d'un premier renfoncement (136) sur une première face (140) de la paroi (122) et, en particulier simultanément, incorporation d'au moins un deuxième renfoncement (138) sur une deuxième face (142), orientée à l'opposé de la première face (140) de la paroi (122), de la paroi (122) ce qui permet de former ladite au moins une entretoise d'éclatement (128) ;
- liaison de la paroi (122) à un ou plusieurs autres composants (112) de boîtier de telle sorte qu'une chambre interne (118) de la cellule électrochimique (110) est entourée par le boîtier (114),
ladite au moins une entretoise d'éclatement (128) étant estampée dans la paroi (122) de la cellule électrochimique (110).

12. Système électrochimique (100),
comprenant plusieurs cellules électrochimiques (110), lesdites plusieurs cellules électrochimiques (110) comprenant :
- un boîtier (114) qui entoure une chambre interne (118) de la cellule électrochimique (110) respective ; et
- un dispositif d'éclatement (108) qui est agencé au niveau d'une paroi (122) du boîtier (114) et en particulier réalisé d'une seule pièce avec la paroi (122),
le dispositif d'éclatement (108) comprenant au moins une entretoise d'éclatement (128), ladite au moins une entretoise d'éclatement (128) présentant une épaisseur variant dans la direction longitudinale (130) et/ou ladite au moins une entretoise d'éclatement (128) étant formée par au moins un premier renfoncement (136), qui est agencé au niveau d'une face interne, orientée vers la chambre interne (118), de la paroi (122), et par au moins un deuxième renfoncement (138), qui est agencé au niveau d'une face externe, orientée à l'opposé de la chambre interne (118), de la paroi (122),
dans lequel
- lesdites plusieurs cellules électrochimiques (110) sont plusieurs cellules électrochimiques (110) selon l'une des revendications 1 à 10
et/ou
- le système électrochimique comprend :
- un boîtier (102) qui entoure une chambre interne (104) du système électrochimique (100) ; et
- un dispositif d'éclatement (108) qui est agencé au niveau d'une paroi (106) du boîtier (102) et en particulier réalisé d'une seule pièce avec la paroi (106),
le dispositif d'éclatement (108) comprenant au moins une entretoise d'éclatement (128), ladite au moins une entretoise d'éclatement (128) présentant une épaisseur variant dans la direction longitudinale (130) et ladite au moins une entretoise d'éclatement (128) étant formée par au moins un premier renfoncement (136), qui est agencé au niveau d'une face interne, orientée vers la chambre interne (104), de la paroi (106) du système électrochimique (100), et par au moins un deuxième renfoncement (138), qui est agencé au niveau d'une face externe, orientée à l'opposé de la chambre interne (104), de la paroi (106) du système électrochimique (100),
ladite au moins une entretoise d'éclatement étant formée par estampage.

13. Procédé de fabrication d'un système électrochimique (100) selon la revendication 12, le procédé comprenant ce qui suit :
- mise à disposition d'une paroi (106) d'un boîtier (102) d'un système électrochimique (100) ;
- incorporation d'au moins une entretoise d'éclatement (128) dans la paroi (106), ladite au moins une entretoise d'éclatement (128) présentant une épaisseur variant dans la direction longitudinale (130) ; et
- incorporation au moins d'un premier renfoncement (136) sur une première face (140) de la paroi (106) et, en particulier simultanément, incorporation d'au moins un deuxième renfoncement (138) sur une deuxième face (142), orientée à l'opposé de la première face (140) de la paroi (106), de la paroi (106) ce qui permet de former ladite au moins une entretoise d'éclatement (128) ;
- liaison de la paroi (106) à un ou plusieurs autres composants de boîtier de telle sorte qu'une chambre interne (104) du système électrochimique (100) est entourée par le boîtier (102),
ladite au moins une entretoise d'éclatement (128) étant estampée dans la paroi (106) du système électrochimique (100).
